Europäisches Patentamt

European Patent Office

Office européen des brevets

(19)

(11) Numéro de publication: **0 197 873**
**B1**

(12) **FASCICULE DE BREVET EUROPEEN**

(45) Date de publication du fascicule du brevet: **06.06.90**

(21) Numéro de dépôt: **86450006.1**

(22) Date de dépôt: **24.02.86**

(51) Int. Cl.⁵: **B64C 1/20**

---

(54) **Escaliers repliables pour véhicules.**

---

(30) Priorité: **25.02.85 FR 8502787**
**21.02.86 FR 8602767**

(43) Date de publication de la demande:
**15.10.86 Bulletin 86/42**

(45) Mention de la délivrance du brevet:
**06.06.90 Bulletin 90/23**

(84) Etats contractants désignés:
**AT BE CH DE FR GB IT LI LU NL SE**

(56) Documents cités:
**BE-A- 5 489 15**
**DE-A- 2 164 540**
**FR-A- 1 300 842**
**FR-A- 2 217 211**
**FR-A- 2 338 833**
**US-A- 3 047 093**
**US-A- 3 403 749**

(73) Titulaire: **SA LATECOERE, 135 rue de Periole,**
**F-31500 Toulouse(FR)**

(72) Inventeur: **Moutot, Pascal, St-Loup de Cammas,**
**F-31140 Aucanville(FR)**

(74) Mandataire: **Ravina, Bernard, Cabinet Bernard**
**RAVINA 24, boulevard Riquet, F-31000 Toulouse(FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un escalier repliable pour véhicules.

On sait que les différents aéroports ne peuvent être équipés des moyens d'embarquement et de débarquement adaptés à chaque type d'appareil.

Pour cette raison, il est apparu souhaitable d'équiper chaque appareil de ses propres moyens d'embarquement des passagers. Il est nécessaire que ces moyens puissent être repliés pour pouvoir s'introduire dans l'appareil et qu'ils occupent à bord le moins de place possible.

Il est connu de l'art antérieur dans les brevets DE-A 2 164 540 et FR-A 2 217 211 d'équiper les appareils d'escaliers repliables. Ces escaliers selon ces brevets sont portés en porte à faux par un chariot destiné à coulisser dans un compartiment ménagé dans le fuselage de l'appareil.

Ces escaliers sont pourvus d'un organe moteur pour actionner le chariot en coulissement dans le compartiment et de moyens moteurs pour plier et déplier suivant un plan vertical la structure lorsque cette dernière est hors du compartiment.

Les escaliers selon ces brevets comportent de nombreux inconvénients quant à l'entraînement du chariot à l'intérieur du compartiment qui est réalisé par un ensemble de câble ou de chaîne n'offrant pas un guidage et une précision de déplacement suffisants pour le lieu de leur implantation.

D'autre part, ces moyens d'embarquement doivent offrir une souplesse suffisante dans leur liaison avec le véhicule pour pouvoir accepter les mouvements de l'un par rapport à l'autre.

De plus, l'escalier repliable doit être parfaitement maintenu en place une fois replié dans le compartiment de l'appareil.

La présente invention a pour but d'éliminer les inconvénients des systèmes connus et d'atteindre les buts ci-dessus énoncés en proposant un escalier repliable parfaitement guidé dans le compartiment de l'appareil, doté d'une liaison souple avec le dit appareil et pouvant s'immobiliser une fois replié dans celui-ci.

A cet effet, l'escalier repliable selon l'invention comporte un chariot monté en coulissement sur des rails dans un compartiment, une structure repliable d'escalier montée en porte à faux sur le chariot, un organe moteur pour actionner le dit chariot dans le compartiment et des moyens moteur pour plier et déplier suivant un plan vertical la structure d'escalier lorsque cette dernière est hors du compartiment et se caractérise en ce que l'organe moteur est constitué par un ensemble pignon-crémaillère et par un dispositif de réglage du jeu de l'ensemble pignon-crémaillère et de guidage du chariot constitué par un jeu de trois galets solidaires du dit chariot et par une glissière en U fixée parallèlement à la crémaillère et sur la partie supérieure du compartiment et destinée à recevoir le jeu de galets.

Suivant une autre caractéristique, l'escalier comprend des moyens permettant un basculement latéral relatif entre l'axe longitudinal de l'escalier et l'axe longitudinal du véhicule et des moyens pour ramener le dit axe longitudinal de l'escalier parallèle à l'axe du compartiment lors de la rentrée de l'escalier dans le dit compartiment.

Suivant encore une autre caractéristique selon l'invention, l'escalier est doté d'au moins un moyen d'immobilisation en coulissement du chariot dans le compartiment en position rentrée.

D'autres avantages et caractéristiques apparaîtront à la lecture de la description d'une forme préférentielle illustrée aux dessins donnés à titre d'exemples nullement limitatifs en lesquels:

- la figure 1 est une vue de côté de l'escalier doté des perfectionnements selon l'invention en position entrée;
- la figure 2 est une vue de côté de l'escalier pourvu des perfectionnements selon l'invention représenté en position déployée;
- les figures 3, 4 et 5 sont vues respectivement de face, de dessus et de côté de l'organe moteur du chariot de l'escalier;
- les figures 6, 7 et 8 sont des vues de dessus, de côté et arrière du dispositif de guidage latéral arrière et de remise en position de chariot dans le compartiment suivant un perfectionnement selon l'invention;
- la figure 9 est une vue en coupe du dispositif de verrouillage en position verrouillée selon l'invention;
- la figure 10 est une vue de ce même dispositif en position déverrouillée;
- la figure 11 est le détail A de la figure 9;
- la figure 12 est une vue de dessus des moyens moteur pour plier et déplier la structure repliable d'escalier et de l'articulation de la dite structure sur le chariot suivant un autre perfectionnement selon l'invention;
- la figure 13 est une vue de côté des dits moyens moteurs représentés lorsque la structure repliable est déployée;
- la figure 14 est une vue de côté du montage des moyens moteurs sur la structure repliable d'escalier selon l'invention;
- la figure 15 est une vue en coupe de la bielle des moyens moteurs pour plier et déplier la structure repliable d'escalier;
- la figure 16 est une vue de côté de l'articulation entre tronçons selon l'invention en position déployée;
- la figure 17 est une vue en coupe selon la ligne BB de la figure 16;
- la figure 18 est une vue de côté de l'articulation entre tronçons lorsque ceux-ci sont repliés;
- les figures 19 à 22 sont des vues schématiques des étapes de verrouillage des tronçons l'un à l'autre;
- la figure 23 est une vue en coupe transversale représentant des chemins de roulement pour les câbles d'entraînement dans le limon du tronçon supérieur;
- les figure 24 et 25 sont des vues en coupe respectivement selon les lignes CC et DD de la figure 23;
- la figure 26 est une vue de côté d'un autre chemin de roulement des dits câbles;

- la figure 27 est une vue du berceau de verrouillage du tronçon inférieur sous le tronçon supérieur;
- la figure 28 est une vue de côté du palonnier selon l'invention;
- la figure 29 est une vue en coupe selon la ligne EE de la figure 28.

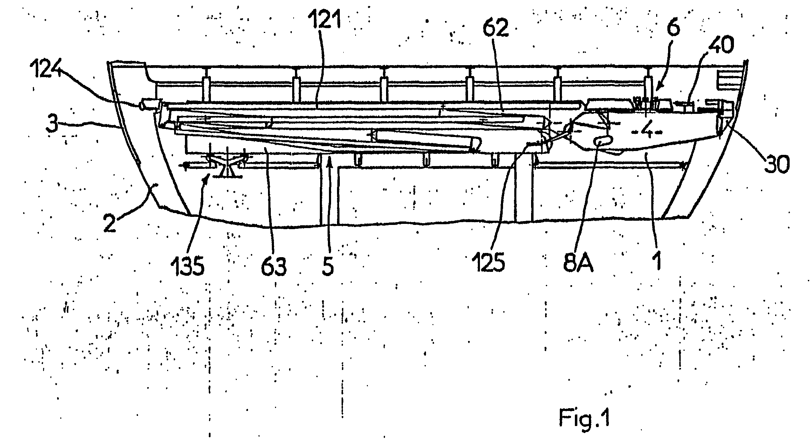

Tel que représenté en figure 1 l'escalier selon l'invention est disposé en position rentrée dans un compartiment 1 ménagé transversalement à l'axe longitudinal du fuselage 2 du véhicule.

Le compartiment 1 est doté d'une ouverture 3 débouchant sous la porte d'accès du véhicule. Par cette ouverture 3 l'escalier est introduit ou extrait du compartiment 1.

L'escalier comporte un chariot 4 monté en coulissement sur des rails 4A dans le compartiment 1. Ce chariot 4 reçoit en porte à faux une structure 5 repliable d'escalier qui lorsqu'elle est logée dans le compartiment 1 est pliée et s'étend vers l'ouverture 2 de ce dernier.

L'escalier est également doté d'un organe moteur 6 soit pour pousser le chariot vers l'ouverture 3 et extraire la structure du compartiment 1 en dehors duquel elle sera dépliée, soit pour ramener la structure dans le compartiment après que celle-ci ait été pliée et amenée lors du pliage dans le prolongment de l'axe du compartiment.

D'autre part l'escalier comporte des moyens moteurs 7 pour plier et déplier suivant un plan vertical la structure 5 lorsque cette dernière est hors du compartiment 1.

Le chariot 4 est constitué par deux flancs latéraux 8 parallèles avantageusement entretoisés et est monté en coulissement dans le compartiment 1 sur des rails 4A.

A cet effet les rails 4A sont fixés parallèlement l'un à l'autre sur la partie supérieure du compartiment et sur quasiment toute la longueur de celui-ci. Ces rails 4A sont formés de préférence de cornières et sont fixés de manière que les ailes horizontales soient tournées l'une vers l'autre et que les ailes verticales soient au dessus des ailes horizontales.

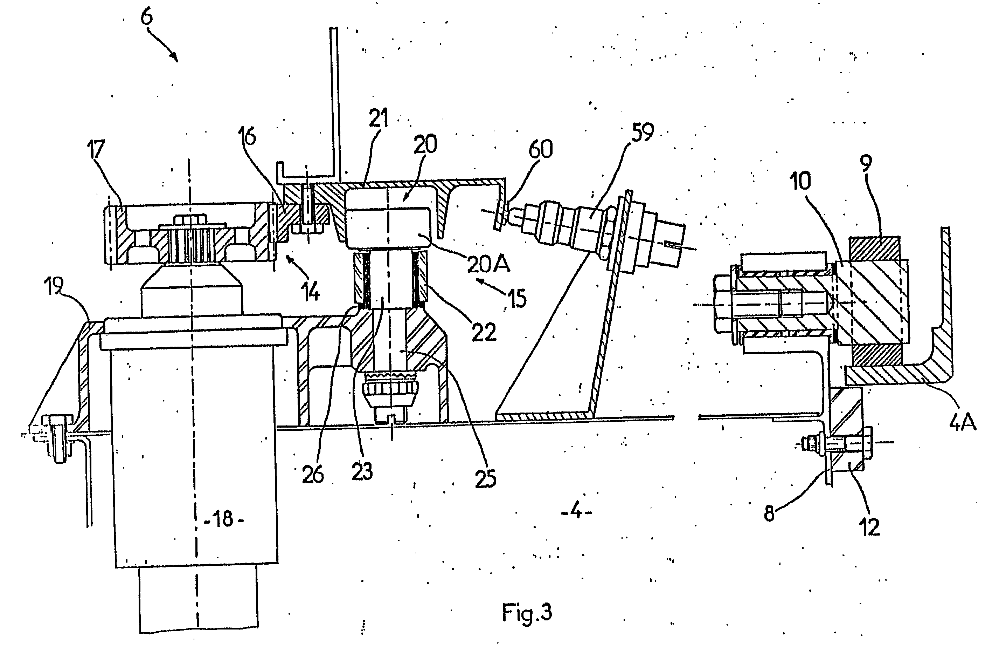

Les ailes horizontales des rails 4A constituent les chemins de roulement pour des roues 9 portés par des bogies 10 articulés suivant un axe horizontal aux flancs 8 du chariot 4 (fig.3).

De préférence sur chaque flanc 8 du dit chariot est monté un bogie 10. Les axes d'articulation des bogies 10 sont disposés dans un même plan transversal à l'axe longitudinal du chariot 4. Le dit chariot est ainsi suspendu sur les rails 4A.

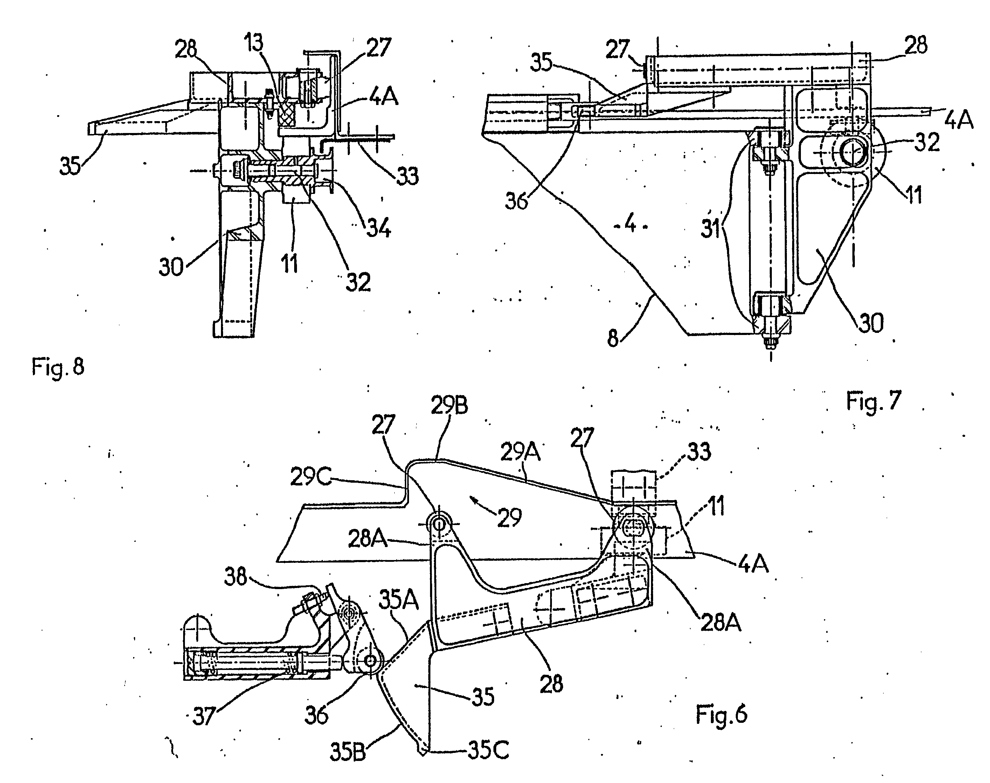

A l'arrière du chariot 4 et de chaque côté de celui-ci est monté un rouleau 11 s'appuyant sous le rail 4A tel que représenté en fig.8.

Les rouleaux 11 permettent de donner au chariot une position stable dans un plan horizontal par rapport à l'axe d'articulation des bogies 10 en assurant le blocage du dit chariot en combinaison avec le porte à faux créé par la structure repliable 5 d'escalier montée à l'avant du chariot 4.

Avantageusement pour éviter en cas de chaos un saut trop important des roues 9 sur les rails 4A ou des rouleaux 11 sur les dits rails, il est prévu de fixer sur le chariot 4, d'une part une butée 12 au droit de l'axe d'articulation du bogie 10 venant se disposer sous le rail 5 (fig.3) et d'autre part une butée 13 au droit de l'axe du rouleau 11 venant se disposer sur le rail 4A (fig.8).

De préférence le jeu entre les butées 12 et 13 et la face du rail 5 en regard duquel elles sont disposées est réglable. A cet effet suivant un exemple de réalisation la butée 12 est excentrique et la butée 13 reçoit des cales dans son montage sur le chariot. Ces butées sont de préférence en nylon ou tout autre matière offrant un faible coefficient de frottement.

Suivant une forme préférentielle de réalisation de l'escalier selon l'invention les moyens moteurs 6 actionnant en coulissement le chariot 4 dans le compartiment 1 et sur les rails 4A de celui-ci sont constitués par un ensemble pignon-crémaillère 14 et par un dispositif 15 du réglage du jeu de l'ensemble pignon-crémaillère 14 et de guidage du chariot 4.

Préférentiellement la crémaillère 16 de l'ensemble pignon crémaillère 14 est fixée sur la partie supérieure du compartiment 1 parallèlement aux rails latéraux 4A et entre ceux-ci et le pignon 17 est fixé en bout de l'arbre de sortie d'un moteur électrique 18 équipé d'un moto-réducteur fixé sur le chariot 4. Préférentiellement le moteur 18 est monté avec son axe vertical dans un support 19 solidaire du chariot 4. Les dents de la crémaillère sont donc disposées dans le sens vertical.

Le moteur électrique est du type de ceux à deux sens de rotation pour que le chariot et la structure puissent être entrainés en translation dans un sens ou dans l'autre.

Le dispositif 15 de réglage du jeu de l'ensemble pignon-crémaillère est selon une forme de réalisation constitué par un jeu de galets 20 solidaires du chariot 4 et par une glissière 21 fixée parallèlement à la crémaillère 16 et sur la partie supérieure du compartiment 1 laquelle glissière est destinée à recevoir le jeu de galets 20.

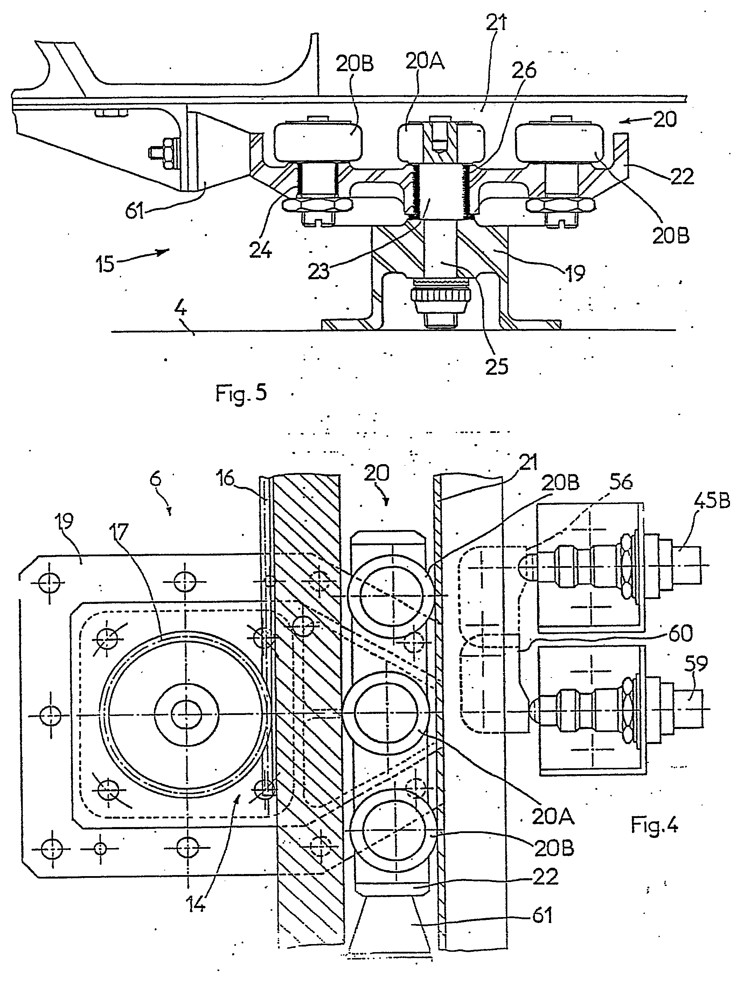

Selon une forme préférentielle de réalisation représentée aux figures 4 et 5 le jeu de galets 20 est monté sur le support 19 sur lequel est fixé le moteur 18 et la crémaillère 16 est fixée contre la glissière 21 dans laquelle est logé le jeu de galets 20. Cette glissière 21 présente de préférence une forme du U dont les branches sont dirigées verticalement vers le bas.

Le jeu des galets 20 comporte trois galets à axes parallèles et verticaux se plaçant dans la glissière 21. Le galet 20A disposé entre les deux galets 20B prend appui sur une face verticale de la glissière 21 dans un plan perpendiculaire au point de tangence entre la crémaillère 16 et le pignon 17.

Les galets 20B sont montés sur un support 22 commun au galet 20A. Ces galets 20B sont destinés à s'appuyer sur l'autre face verticale de la glissière 21. Les galets 20A et 20B sont montés libres en rotation sur leur axe de rotation vertical.

Le support 22 étant solidaire du support 19 portant le moteur 18 et la crémaillère 16 étant solidaire de la glissière 21, le réglage du jeu du dispositif pignon-crémaillère 14 est effectué en réglant l'entraxe entre le galet 20A et l'axe du moteur.

A cet effet l'axe de rotation du galet 20A est monté dans un excentrique 23 réglable. Les galets 20B s'appuyant sur l'autre face de la glissière 21 guide latéralement le chariot 4 lors du coulissement de celui-ci dans le compartiment 1 en combinaison avec le galet 20A. Il est donc prévu un réglage du jeu de fonctionnement pour assurer un bon guidage latéral du chariot 4 par rapport à la glissière 21.

Le réglage de l'entraxe entre le moteur 18 et le galet 20A donnant le jeu de fonctionnement du dispositif pignon crémaillère 14, ce réglage est immuable. Ainsi le jeu de guidage dans la glissière 21 est obtenu sur au moins un galet 20B.

A cet effet l'axe de rotation d'un galet 20B est monté sur un excentrique 24 réglable. Le chariot 4 portant la structure 5 repliable d'escalier coulisse dans le compartiment 1 sous l'action de la rotation du moteur 18 provoquant l'engrennement du pignon 17 sur la crémaillère 16.

Le chariot est supporté par les roues 9 des bogies 10 et les rouleaux II et est guidé par le jeu de galets 20 dans la glissière 21.

Lorsque le chariot 4 est arrivé en fin de course, le moteur 18 n'est plus actionné en rotation. Ce moteur comprend un frein et est de type de ceux qu'il lorsqu'il n'est plus alimenté le frein fonctionne instantanément et reste dans une position de freinage fixe.

La structure 5 repliable d'escalier montée en porte à faux sur le chariot 4 peut subir des efforts latéraux lorsque celle-ci se trouve en train de sortir ou d'entrer dans le compartiment 1.

Ces efforts entraînent un couple sur le dispositif de guidage latéral du chariot 4 dans le compartiment 1 et le dit dispositif ne suffit plus pour guider correctement le chariot dans le dit compartiment. Une des caractéristiques de l'escalier selon l'invention consiste en ce que le dit escalier est doté de moyens permettant la variation de la position angulaire de son axe longitudinal du compartiment 1 et autour d'un axe de rotation vertical et de moyens de guidage du chariot 4 par rapport aux rails latéraux 5 montés à l'arrière du dit chariot.

Les moyens permettant la variation angulaire de l'axe longitudinal de l'escalier sont constitués par le montage en articulation sur le chariot 4 par rapport à un axe vertical du dispositif de réglage du jeu de l'ensemble pignon crémaillère 14 et de guidage latéral du chariot 4.

A cet effet le corps 22 du jeu de galet 20 est articulé suivant un axe vertical 25 au support 19 supportant le moteur 18.

Cet axe vertical d'articulation est coaxial à l'axe de rotation du galet 20A du réglage de jeu de l'ensemble pignon-crémaillère.

L'axe d'articulation 25 sur le support 19 du moteur 18 constitue l'excentrique 23 de réglage du jeu du pignon crémaillère 14 et porte une bague 26 de frottement autour de laquelle s'articule en pivotement le corps 22 support du jeu de galets 20.

Ainsi l'axe longitudinal de l'escalier peut prendre une position angulaire variable par rapport à l'axe longitudinal du compartiment 1 et autour d'un axe de rotation vertical.

Lorsque la rotation du moteur 18 n'est pas bloquée l'axe de rotation vertical est constitué par l'axe d'articulation 25 du corps 22 sur le support 19.

Afin que cette variation angulaire ne soit pas freinée les axes d'articulation des bogies 10 sur le chariot 4 sont disposés dans un plan transversal au dit chariot et passant par l'axe du moteur 18 et l'axe d'articulation 25 confondu avec l'axe du galet 20A (fig.3).

D'autre part afin de limiter la variation angulaire de l'axe longitudinal de l'escalier autour de l'axe de rotation vertical 25 le chariot 4 sur sa partie arrière est doté des moyens de guidage par rapport aux rails 4A.

Ces moyens de guidage représentés aux figures 6, 7 et 8 sont fixés de chaque côté de la partie arrière du chariot 4 et sont constitués chacun par deux galets 27 destinés à rouler contre la face verticale d'un rail 4A et par un corps 28 supportant les dits galets et s'articulant suivant un axe vertical sur le chariot 4. Le corps 28 présente deux branches 28A portant chacune un galet 27 et dont une est en avant de l'axe d'articulation du corps 28 sur le chariot et dont l'autre est en arrière du dit axe. Lorsque l'axe longitudinal de la structure 5 d'escalier est paralèle à l'axe longitudinal du compartiment 1, il réside un jeu sur chaque côté du chariot 4 entre un galet 27 et le rail 4A en regard duquel il se trouve.

Ce jeu est nécessairement compatible avec le jeu des galets 20B dans la glissière 21 centrale. La limitation de la variation de la position angulaire de l'axe longitudinal de la structure 5 d'escalier est donnée lorsque les deux galets 27 d'un même corps 28 sont en appui contre la face verticale d'un rail 4A.

Lorsque la structure 5 repose sur le sol ou est en cours de déploiement ou bien de repliement c'est-à-dire lorsque le chariot 4 est en position sortie finale, des efforts peuvent s'exercer soit respectivement sur le véhicule (la structure étant sur le sol ne peut pas bouger), soit alors sur la structure elle-même. Ces efforts dans ces positions sont plus importants que ceux s'exerçant sur la structure 5 alors que celle-ci sort ou rentre dans le compartiment 1, en raison du fait que ces efforts portent sur des surfaces plus grandes.

Il est donc nécessaire que le véhicule et l'escalier aient un mouvement relatif de l'un par rapport à l'autre de manière à soulager leur liaison de ces efforts. A cet effet l'escalier selon l'invention comprend des moyens permettant un basculement latéral relatif entre l'axe longitudinal du véhicule et des moyens pour ramener le dit axe longitudinal de l'escalier parallèle à l'axe du compartiment 1 lors de la rentrée du dit escalier dans le dit compartiment.

Ces moyens de basculement latéral et de remise en position de l'escalier dans le compartiment sont constitués par une encoche 29 ménagée dans la face verticale des rails 4A en regard duquel se trouve, lorsque le chariot 4 est en fin de course, le galet 27 avant du dispositif de guidage latéral arrière du dit chariot 4, par le montage du corps 22 support des galets 20 sur le chariot. En fin de course le moteur 18 du chariot 4 est bloqué en rotation.

Sous l'action d'efforts le chariot 4 peut pivoter autour d'un axe vertical passant dans ce cas par le point primitif de l'ensemble pignon crémaillère 14.

Ce point primitif se trouve dans le plan vertical contenant l'axe longitudinal de l'escalier.

Ainsi lorsqu'un effort est exercé sur l'extrémité de l'escalier ou sur le véhicule, le dit effort peut provoquer le pivotement du chariot 4 par rapport à un axe vertical ce qui a pour conséquence d'un côté de rapprocher d'un rail 4A l'axe d'articulation du corps 28 portant les galets 27.

Ce rapprochement provoque la pénétration du galet avant 27 dans l'encoche 29 par rotation autour du galet arrière 27 et de l'articulation du corps 28 sur le chariot 4. De l'autre côté du chariot l'axe d'articulation du corps 28 est articulé indirectement au chariot 4 par l'intermédiaire d'une pièce 30. Cette pièce 30 s'articule dans une chape 31 formée à l'arrière du chariot 4 et sur ses deux côtés. De façon préférentielle cette pièce 30 porte sur un axe horizontal 32 le rouleau 11 de support du chariot 4 qui roule sous l'aile horizontale du rail 4A. Le rouleau 11 est monté au droit du galet arrière 27 de guidage latéral afin de ne pas freiner le pivotement du corps 28 par rapport au chariot 4.

Afin d'éviter la sortie du rouleau 11 du rail 4A sous l'effet de l'éloignement de l'axe d'articulation de la pièce 30 du dit rail la pièce 30, est dotée d'un moyen de rétention du rouleau 11 sous le rail 4A. Ce moyen de rétention tel que représenté en fig. 8 est constitué par un crochet 33 fixé latéralement sous le rail 4A et par un butoir 34 contre lequel s'accroche le crochet 33 en cas de basculement latéral important. Le butoir 34 est avantageusement monté coaxialement à l'axe horizontal 32 du rouleau 11. Le battement latéral maximal est donné lorsque le galet avant 27 est en contact avec le fond de l'encoche 29.

Cette encoche 29 est formée par un décrochement vers l'extérieur de l'aile verticale du rail 4A. Afin de ramener l'axe de l'escalier l'encoche 29 est dotée d'une portion inclinée 29A d'arrière en avant sur laquelle lors de l'entrée du chariot le galet avant 27 roule et donc remet en position centrale l'escalier dans le compartiment 1. L'encoche 29 présente après cette portion inclinée 29A une portion droite 29B puis une portion perpendiculaire 29C à l'axe du rail 4A.

Cependant il est nécessaire de déterminer une valeur d'effort en deçà de laquelle le basculement latéral relatif ne s'effectue pas car au moindre mouvement relatif du véhicule par rappport à l'escalier, la liaison de l'un par rapport à l'autre serait tout de suite libre ce qui n'est pas souhaitable.

Les moyens permettant le basculement relatif de l'axe de l'escalier par rapport au véhicule sont dotés chacun d'un dispositif déterminant un seuil d'effort au delà duquel le basculement est permis.

Ce dispositif est constitué par une came 35 fixée au corps 28 portant les galets 27, par une roue 36 articulée sur le chariot 4 roulant contre la came et par un ressort 37 de compression fixé au dit chariot maintenant la roue appuyée contre la came 35 comme représenté en figure 6.

Cette came présente deux chemins de roulement 35A et 35B. Le ressort 37 est réglé en compression et est taré à une valeur correspondante au seuil auquel le basculement latéral relatif est autorisé. En deçà de ce seuil la roue 36 est appuyée sur le chemin de roulement incliné 35A.

La force du contact de la roue 36 sur le chemin 35A crée un couple par rapport à l'articulation du corps 28 sur le chariot 4. Les efforts s'exerçant sur le véhicule ou sur l'escalier créent un couple également autour de l'axe d'articulation du corps 28 sur le chariot 4, lequel couple est dû au contact du galet 27 arrière contre le rail 4A. Tant que ce couple du galet 27 sur le rail 4A n'est pas supérieur au couple de la roue 36 sur le chemin 35A, le basculement n'est pas autorisé. Quand ce couple devient supérieur à l'autre le basculement est autorisé et la roue 36 passe sur le chemin de roulement 35B.

Ce chemin de roulement 35B est en arc de cercle dont le centre est coaxial à l'articulation du corps 28 sur le chariot 4. Ainsi l'appui de la roue 36 par le ressort 37 ne crée plus de couple par rapport à l'axe d'articulation. Sur l'extrémité arrière du chemin de roulement 35B est ménagé un talon 35C de butée pour la roue 36.

Avantageusement la roue 36 a une course angulaire réglable par rapport à son articulation par une butée réglable 38. Les efforts extérieurs sont absorbés par la souplesse de la liaison de l'escalier dans le compartiment 1. Le chariot 4 et la structure repliable 5 d'escalier que celui-ci porte sont donc recentrés dans le compartiment 1 par le dispositif cidessus décrit. En fin de course de rentrée toute la structure se trouve à l'intérieur du compartiment 1 afin que le chariot 4 et la structure 5 soient dans une position fixe en position rentrée, l'escalier selon l'invention est doté d'au moins un moyen d'immobilisation en coulissement du dit escalier dans le compartiment 1.

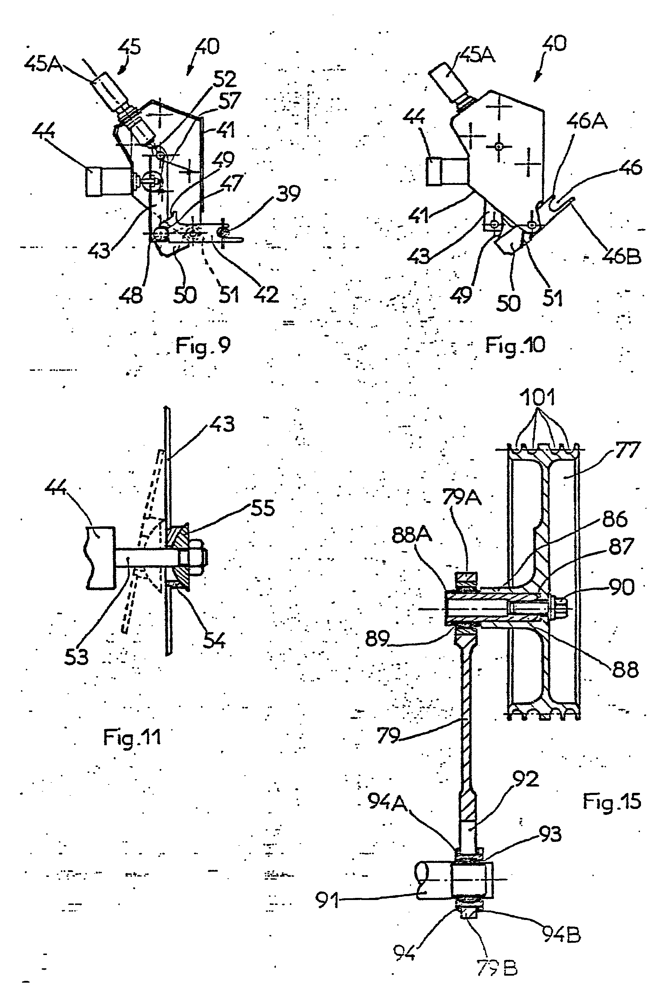

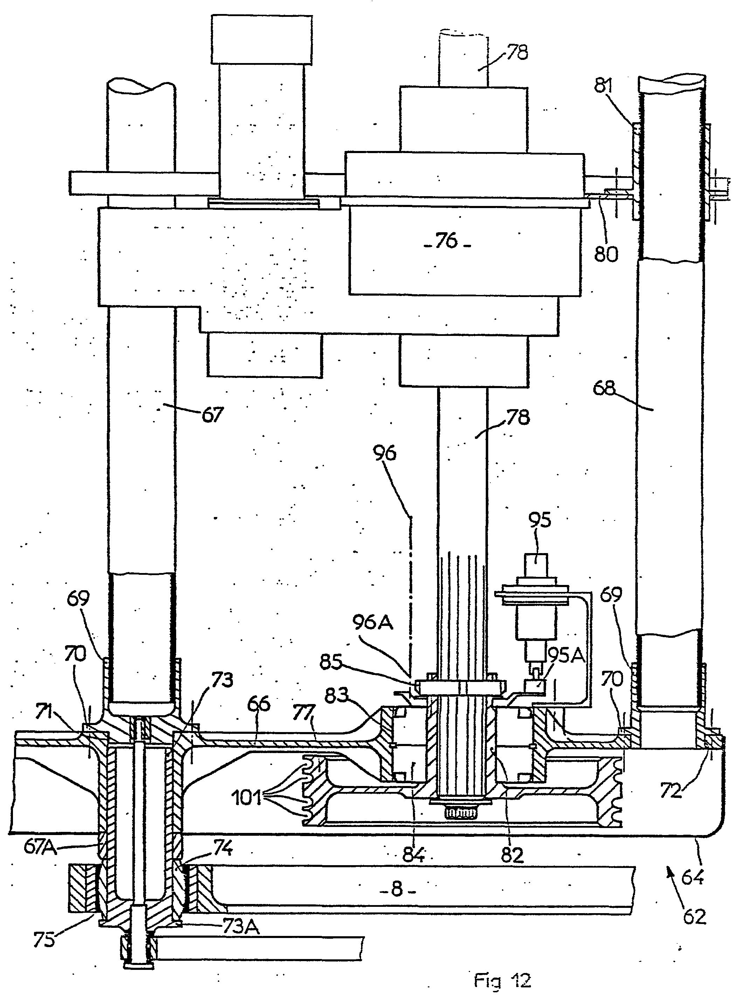

Tel que représenté aux figures 9 et 10, l'escalier est doté d'un seul moyen d'immobilisation constitué par un ergot 39 fixé à l'extrémité de la glissière centrale 21 et par un dispositif de verrouillage 40 fixé sur le chariot 4 et destiné à venir coopérer avec l'ergot 39.

De préférence l'ergot 39 est fixé verticalement et le dispositif de verrouillage 40 est actionné sur le dit ergot dans un plan horizontal parallèle au chariot 4 sur lequel le dit dispositif est monté.

Selon une forme préférentielle de réalisation, le dispositif de verrouillage 40 monté dans un boîtier 41 fixé sur la face supérieure du chariot 4 est constitué par un verrou 42 destiné à recevoir l'ergot 39, par un levier 43 articulé commandant le verrou 42 par un organe d'entraînement 44 de levier 43 et par au moins un contacteur 45 détectant l'état de verrouillage du dispositif 40.

Le verrou 42 est articulé par sa partie médiane dans le boîtier 41 sur un axe vertical.

Une des extrémités du verrou 42 est extérieure au boîtier 41 et comporte une encoche 46 destinée à recevoir l'ergot 39.

Cette encoche 46 est délimitée par deux branches 46A et 46B dont une est plus longue que l'autre pour des raisons qui seront expliquées plus avant.

L'autre extrémité du verrou 42 intérieure au boîtier 41 comporte un décrochement 47 dans lequel est disposé (en position verrouillée) un galet 48 solidaire d'une extrémité du levier de commande 43. Le décrochement 47 est suivi par un talon incliné 49 sur lequel s'appuie le galet 48 en position déverrouillée.

Autour de l'axe d'articulation du verrou 42 dans le boîtier 41 est monté un capot 50 dans lequel se place l'extrémité du verrou dotée du décrochement 47 en position déverrouillée sous l'effet d'un ressort 51.

Le levier 43 de commande est doté en une extrémité du galet 48 destiné à se placer dans le décrochement 47 du verrou 42. Le levier 43 est monté articulé dans le boîtier 41 sur un axe parallèle à l'axe d'articulation du verrou 42. L'axe d'articulation du levier est proche de l'autre extrémité sur laquelle est rapportée une came 52.

Entre l'extrémité du levier 43 portant le galet 48 et l'axe d'articulation du dit levier est située la liaison du levier 43 avec son organe d'entraînement 44. Cette liaison est proche de l'axe afin d'amplifier le mouvement angulaire de l'extrémité portant le galet 48. L'organe d'entraînement 44 du levier 43 est de préférence constitué par un électro-aimant dont le noyau mobile est prolongé par une tige 53. La liaison entre la tige 53 et le levier 43 représentée en figure 11 est constituée par une portée 54 fixée sur le levier 43 et présentant une section transversale circulaire et par une butée 55 fixée sur la tige 53 et présentant une section transversale circulaire de même rayon que la portée 54 de façon à reposer sur cette dernière.

La portée 54 est pourvue d'un orifice de passage pour la tige 53 dotée de la butée 55. La portée 54 et la butée 55 sont en des matériaux à faible coefficient de frottement par exemple du nylon.

Ainsi lorsque l'électro-aimant est excité la tige 53 rentre dans le corps de l'électro-aimant et entraîne par la traction rectiligne de la butée 55 la rotation du levier 43 par rapport à son axe d'articulation dans le boitier alors que la portée 54 glisse sur la butée 55.

En position verrouillée l'ergot 39 est logé dans l'encoche 46 du doigt 42 et la galet 48 du levier 43 se trouve dans le décrochement 47 du doigt 42 (fig. 9).

Ainsi le chariot 4 en position rentrée est bloqué en translation et par l'ergot 39 dans le verrou 42 dans un sens et par des butoirs portés par le chariot 4 s'appuyant dans le fond du compartiment dans l'autre sens.

Lorsque le déverrouillage est commandé suite à l'ouverture de la trappe obturant le compartiment 1, l'électro-aimant est alimenté ce qui provoque le basculement du levier 43 par rapport à son axe d'articulation dans le boîtier 41.

Ce basculement provoque le relachement de l'appui de la came 52 du levier 43 d'un contacteur 45A monté sur le boîtier 41 qui est appuyé lorsque le chariot 4 est verrouillé.

Le relachement de ce contacteur 45A provoque le fonctionnement du moteur 18 des moyens moteurs d'entraînement du chariot 4.

Le basculement du levier 43 provoque également la sortie du galet 48 du décrochement 47. Ce décrochement 47 est immédiatement obturé par le capot 50 qui se rabat vers le verrou 42 sous l'effet du ressort 51 (fig. 10). Le basculement du levier 43 entraîne donc et le dégagement du galet 48 du décrochement 47 et l'avance du chariot 4.

Cette avance du chariot 4 permet par l'appui de l'ergot 39 sur la plus petite branche 46A de l'encoche 46 de faire basculer le verrou 42 jusqu'à ce que le galet 48 se trouve sur le talon incliné 49.

Le verrou 42 à cet instant là est dans un état stable. Cependant l'électro-aimant est encore sous tension ce qui n'est plus utile car le galet 48 est en contact avec le talon 49 du verrou 42.

Le dispositif de verrouillage est donc muni d'un deuxième contacteur 45B (fig.4) déterminant la position du chariot 4 et qui provoque la coupure de l'alimentation de l'électro-aimant lorsque le dit chariot a atteint une certaine position.

De préférence ce contacteur 45B est monté sur le chariot 4 et est actionné par une came 56 fixée sur la glissière centrale 21.

Lors de la rentrée du chariot 4 le verrouillage se fait automatique ment sans action autre que mécanique. La branche 46B de l'encoche 46 est plus longue que la branche 46A et entre en contact avec l'ergot 39 ce qui provoque le basculement du verrou 42, le roulement du galet 48 sur le talon 49 du verrou 42.

Ensuite l'extrémité du levier 43 repousse le capot 50 toujours sous l'effet du basculement du verrou 42 jusqu'à ce que le galet 48 puisse pénétrer dans le décrochement 47 du verrou 42. La pénétration du galet 48 est provoquée par un ressort 57 agissant sur le levier 43.

L'arrêt de l'avance du chariot 4 est obtenue par le contacteur 45B actionné par la came 56. Le contacteur 45A étant à nouveau actionné par la came 52 du levier 43 provoque la commande de fermeture de la trappe du compartiment 1.

Pour extraire la structure 5 du compartiment 1 le chariot mobile se déplace vers une position avant depuis une position arrière suivant laquelle le chariot est disposé à proximité du fond du compartiment et suivant laquelle la structure 5 est entièrement logée dans le compartiment.

Suivant la position avant, le chariot 43 est disposé au niveau de l'ouverture 3 et la structure 5, avant deploiement s'étend en dehors du compartiment.

En position de sortie et lorsque la structure repliable 5 n'est pas dépliée le chariot 4 n'est pas verrouillée et n'est bloqué en position que par le frein du moteur 18.

Cet arrêt du moteur 18 et son freinage sont donnés par un contacteur 59 porté par le chariot 4 et par une came 60 fixée sur la glissière centrale 21 et par laquelle est actionné la contacteur 59. Ce contacteur 59 est monté parallèlement au contacteur 45B de fin de course et la came 60 présente un profilé identique à la came 56 de fin de course, tel que représenté en figure 3.

Préférentiellement l'axe longitudinal du contacteur 59 est disposé dans le plan où se trouve les axes d'articulation des bogies 10, l'axe de rotation du pignon 17 du dispositif pignon crémaillère 14 et l'axe du galet 20A.

Ce positionnement du contacteur 59 dans ce plan évite son changement d'état lors du mouvement relatif de l'escalier par rapport au véhicule.

Dans cette position de sortie le chariot 4 vient en butée sur sa partie avant sur un tampon 61 (figures 4 et 5).

Lorsque le contacteur 59 de fin de course chariot détecte la came 60 le moteur 18 est coupé et freiné et les moyens moteurs 7 pour déplier la structure repliable 5 d'escalier sont mis en fonctionnement.

La structure repliable 5 est articulée entre les flancs latéraux 8 du chariot 4 et sur la partie avant de celui-ci.

La dite structure est consituée par un premier tronçon d'escalier ou tronçon supérieur 62 monté par son extrémité supérieure en pivotement sur le chariot mobile 4, par un second tronçon d'escalier ou tronçon inférieur 63 articulé en extrémité inférieure du précédent suivant un axe horizontal et par deux garde-corps repliables 121 montés en articulation chacun latéralement au tronçon supérieur 62 et au tronçon inférieur 63.

Sous l'action des moyens moteurs 7 la structure est susceptible de se déployer ou de se replier en dehors du compartiment 1. Lorsque la structure est déployée le tronçon inférieur d'escalier 62 vient dans le prolongement du tronçon supérieur et par son extrémité inférieure est en appui sur le sol. Dans cette position les tronçons d'escalier 62 et 63 sont inclinés du sol vers la porte du fuselage. Toujours dans cette position les gardes corps 121 sont dressés sur les tronçons d'escalier 62 et 63.

Lorsque la structure est pliée le tronçon d'escalier inférieur 63 est replié sous le tronçon supérieur 62 et les gardes corps 121 sont repliés latéralement de chaque côté des deux tronçons.

Le tronçon inféreiur 63 est de longueur inférieure à celle du tronçon supérieur 62, de manière à être complètement en dehors du compartiment 1, lorsque le chariot 4 est en position avant, pour pouvoir se déployer ou se replier sous le tronçon supérieur 62 par rotation autour de l'axe d'articulation.

Chaque tronçon 62 et 63 est constitué par deux limons 64 creux parallèles espacés par des marches.

De préférence les deux limons présentent chacun une section droite rectangulaire et sont constitués en tole pliée. Les marches 65 réalisées en "sandwich" nids d'abeille sont recouvertes d'un matériau anti-dérapant.

Il est bien évident que les marches 65 sont disposées chacune suivant des plans obliques à l'axe longitudinal des caissons de manière à être horizontales lorsque la structure 5 est déployée.

La structure d'escalier 5 est articulée entre les flancs 8 du chariot 4 par l'extrémité supérieure du tronçon supérieur 62. Les tronçons inférieurs 63 et supérieurs 62 sont sur toute leur longueur rectilignes et le tronçon supérieur 62 comporte sur son extrémité supérieure une structure de renfort 66 inclinée vers le bas par rapport au tronçon 62 et parralèle aux marches 65. Sur cette structure 66 est fixée la dernière marche 65 de l'escalier. Cette structure 66 est fixée sur chacune des faces intérieures des limons supérieurs 64 qui présentent une portion inclinée vers le bas. Les limons 64 sont entretoisés par deux arbres parallèles 67 et 68 dont un est coaxial à l'axe d'articulation du tronçon 62 sur le chariot 4 (fig. 12).

Chaque arbre 67 et 68 est doté sur ses extrémités d'une chemise 69 cylindrique se fixant par une collerette 70 dans des alésages 71 et 72 ménagés respectivement dans la partie avant et dans la partie arrière des structures 66 de renfort des limons 64. Les alésages 71 par rapport auxquels est fixé l'arbre avant 67 est ménagé sur une grande longueur relativement aux alésages 72. Les alésages 71 sont destinés à recevoir un moyeu 73 se fixant dans le fond de la chemise 69 coaxialement à l'arbre 67 et portant sur leur autre extrémité une rotule 74 destinée à être montée dans un palier 75 ménagé sur l'extrémité avant des flancs latéraux 8 du chariot 4. La rotule 74 est de préférence bloqué entre un épaulement 73A ménagé sur le moyeu 73 et une entretoise 67A s'appuyant sur la dite rotule et le bord de l'alésage 71.

La structure 5 repliable d'escalier est montée rotative entre les flancs 8 du chariot 4 par rapport à l'axe défini par l'arbre avant 67. Entre les arbres 67 et 68 sont montés les moyens moteurs 7 pour plier et déplier la structure 5 repliable.

Ces moyens moteurs 7 tels que représentés aux figures 12 à 15 sont constitués par un moteur 76 équipé d'un moto-réducteur, par au moins un plateau 77 circulaire solidaire d'un arbre de sortie 78 du moteur et par au moins une bielle 79 articulée entre un plateau 77 et un flanc latéral 8 du chariot 4.

Le moteur 76 est monté entre les arbres 67 et 68 et dans la partie médiane de ceux-ci sur un berceau 80. Le dit berceau est monté sur les arbres 67 et 68 par l'intermédiaire de manchons 81 fixés sur les dits arbres.

Le berceau 80 est constitué par une paroi comportant sur son pourtour un renfort perpendiculaire. Le dit berceau présente une empreinte 80A en portion de cercle destinée à recevoir le moteur 76 qui vient se positionner par rapport à ce berceau. Le moteur 76 est du type électrique et est du type de ceux dotés d'un frein agissant dès que le moteur n'est plus alimenté.

Avantageusement ce moteur est doté d'une commande manuelle constituée par un carré 76A orienté de manière à être accessible entre deux marches 65 de l'escalier. De préférence le moteur 76 est doté de deux arbres de sortie 78 coaxiaux de préférence cannelés à l'extrémité de chacun desquels est monté un plateau 77.

Tel que représenté en figure 11 chacun des plateaux 77 est desposé à l'intérieur des limons 64 du tronçon supérieur 62 et au delà de la structure de renfort 66. Ce plateau 77 circulaire présente en son centre une portée cylindrique creuse 82 cannelée intérieurement destinée à recevoir l'arbre 78 et à être guidée en rotation dans un alésage 83 ménagé sur la structure de renfort 66.

Le guidage en rotation du plateau 77 est réalisé par un roulement 84 monté dans l'alésage 83. Le dit plateau est bloqué en translation sur l'arbre 78 de manière connue par exemple par l'intermédiaire d'un écrou 85 se vissant sur la portée 82 et bloquant le dit plateau entre les bords de la bague intérieure du roulement 84. Afin de pouvoir monter ce plateau 77 il est prévu dans les flancs 8 du chariot 4 une lumière oblongue 8A.

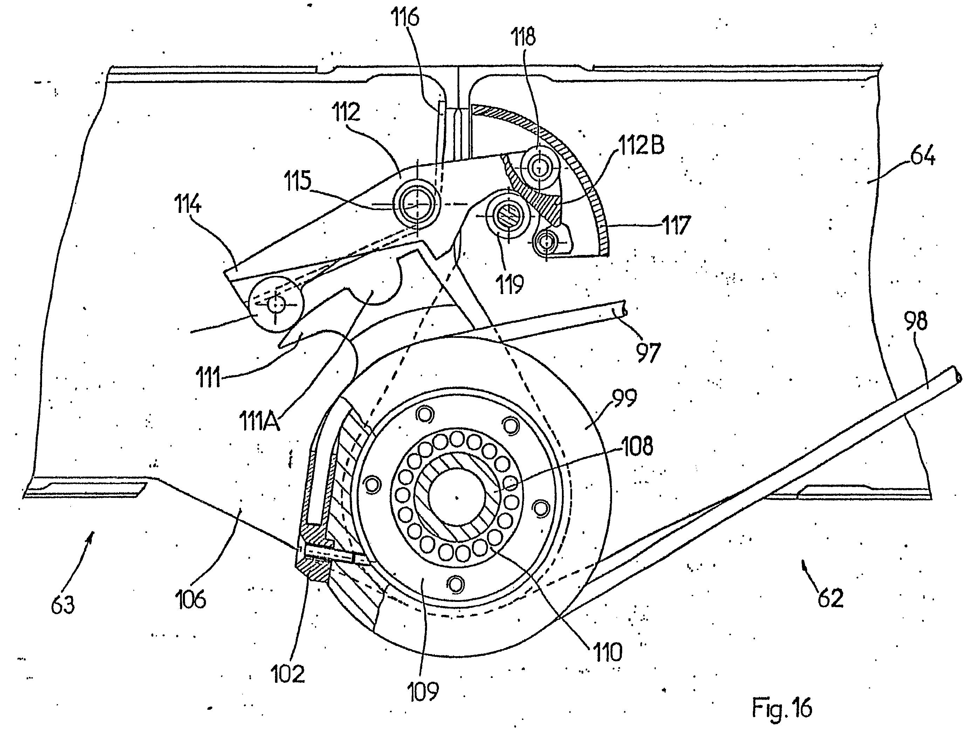

Entre chaque plateau 77 et un flanc 8 latéral du chariot 4 est articulée la bielle 79. La dite bielle est montée en articulation par sa tête 79A sur le plateau 77. Le dit plateau comporte à cet effet un lamage 86 ménagé à une distance prédéterminée du centre du plateau (fig. 15). On comprendra aisément que la distance entre les axes du lamage 86 et du centre du plateau 77 définit une manivelle.

Le lamage 86 est doté d'un orifice 87 épaulé et débouchant destiné à recevoir une douille 88 comportant une rotule 89 sur laquelle se monte la bielle 79 par sa tête 79A.

La douille 88 est montée dans l'orifice 87 du lamage 86 par une vis 90 et la rotule 89 est bloquée entre la face plane du lamage 86 et un épaulement 88A ménagé sur la douille 88.

La tête 79A de la bielle 79 se monte sur la rotule 89 par une bague de glissement adaptée. Le lamage 86 du plateau 77 débouche à l'extérieur du limon 64 au travers d'une lumière en arc de cercle.

La bielle 79 est disposée entre le limon 64 et le flanc 8 latéral du chariot 4. Le pied 79B de la bielle 79 est monté sur un plot 91 fixé sur le flanc 8 du chariot 4. Le pied 79B comporte un orifice oblong 92 allongé dans l'axe de la bielle 79.

Sur le plot 91 est bloquée une rotule 93 sur laquelle est montée une bague 94 adaptée à la dite rotule. La bielle 79 est montée par son pied 79B sur la bague 94 et est guidée en translation par rapport à cette bague 94 par deux méplats ménagés sur la dite bague et s'appuyant sur les bords de l'orifice oblong 82. La bielle est bloquée en translation suivant l'axe du plot 91 d'un côté par la bague 94 qui comporte une collerette 94A et par un écrou 94B se serrant sur la bague 94 de l'autre côté.

Il va de soi que la collerette 94A et l'écrou 94B soit d'un diamètre supérieur à la largeur de l'orifice oblong 92. La bielle 79 est montée sur ses articulations de manière à être parallèle et au flanc 8 du chariot 4 et au limon 64 du tronçon supérieur 62.

La structure 5 repliable d'escalier est donc montée en porte à faux et en articulation sur le chariot 4 et les moyens moteurs 7 permettent son dépliement et son repliement.

Lorsque le chariot 4 arrive en fin de course avant, le contacteur 59 porté par le dit chariot est actionné par la came 60 fixée sur la glissière centrale 21. Cet actionnement du contacteur 59 commande la mise en fonctionnement des moyens moteurs 7.

La structure 5 repliable d'escalier se trouve dans une position horizontale, avec le tronçon inférieur 63 sous le tronçon supérieur 62, lorsque le chariot 4 est en position de sortie. Dans cette position horizontale la structure d'escalier 5 par son poids crée un couple par rapport à son axe d'articulation sur le chariot 4.

Afin de maintenir la structure en position horizontale une force résistante opposée à la force créée par le blocage du moteur 76 des moyens moteurs 7 et par la liaison de la bielle 79 entre le plateau 77 et le chariot 4.

Sous l'effet du poids de la structure il est créé un effort de traction sur la bielle 79 ce qui a pour effet de maintenir la dite bielle en contact avec le plot 91 du chariot 4.

Lorsque le moteur 76 n'est pas actionné la structure repliable 5 est dans une position stable.

Dès que le moteur reçoit l'ordre de fonctionner (ordre donné par le contacteur 59 actionné par la came 60) le plateau 77 est entraîné en rotation.

La rotation du plateau 77 est dans le même sens que le couple créé par le poids de la structure.

Cette rotation à tendance à raccourcir la distance entre la tête 79A de la bielle 79 articulée sur la plateau 77 et le pied 79B articulé sur le chariot mais le poids maintient cette distance toujours indentique.

La tête 79A de la bielle 79 est entraînée en rotation par rapport à l'axe du plateau 77 et par rapport à l'axe du plot 91 du pied 79B.

Le poids de la structure repliable 5 entraîne donc l'axe de rotation du plateau 77 et donc provoque lui-même son basculement par rapport à son articulation sur le chariot 4. La vitesse de dépliement de la structure est proportionnelle à la vitesse de rotation du plateau 77.

Les moyens moteurs 7 présentent donc une grande sécurité car en cas de coupure de l'alimentation du moteur 76 la structure repliable reste dans une position fixe.

La course angulaire de la structure 5 est donnée par la longueur de la bielle 79 et la valeur de la distance séparant la tête de bielle 79A de l'axe de rotation du plateau 77.

Cette course angulaire peut varier en raison des variations de hauteur entre le véhicule et le sol sur lequel prend appui l'extrémité inférieure de l'escalier.

Dès que l'extrémité inférieure de l'escalier touche le sol, le dit escalier est en position fixe.

La variation de la course angulaire de l'escalier est permise par l'orifice oblong 92 du pied 79B de la bielle 79 par lequel s'articule la dite bielle sur le plot 91 du chariot 4.

Dans le cas où la distance entre le sol et le véhicule est la plus petite prévue, l'escalier est en position déployée fixe, alors que le plateau 77 n'a pas fini sa rotation, le dit plateau finit sa course en poussant la bielle 79 de manière que celle-ci coulisse sur le plot 91.

La variation de la course angulaire de l'escalier prévue est suffisante pour accepter les variations de hauteur possibles entre le sol et le véhicule. Il va de soi que la rotation du plateau se fait sur une valeur angulaire correspondant à la hauteur maximale prévue entre le sol et le véhicule et donnant l'inclinaison maximale de l'escalier.

Pour le repliement de la structure 5 d'escalier le plateau 77 est entraîné en rotation inverse au sens de deploiement ce qui a pour effet de provoquer un effort de traction sur la bielle 79 supérieur au couple créé par le poids de la structure 5.

Les fins de rotation du plateau 77 en déploiement et en repliement sont donnés respectivement par des contacteurs 95 et 96 fixés sur la structure de renfort 66 (un des contacteur est représenté en traits mixtes fins) et actionnés par des cames 95A et 96A solidaires en rotation du plateau 77 (dont une se trouve dans le prolongement du trait mixte fin), (figure 12).

Lors du basculement de la structure d'escalier 5 pendant la phase de depliement le tronçon inférieur 63 s'écarte angulairement du tronçon supérieur 62 par rapport à son articulation sur ce tronçon supérieur.

Suivant encore une caractéristique de l'escalier selon l'inventio les moyens moteurs 7 pour déplier et plier la structure comportent au moins un dispositif de transmission de mouvement au tronçon inférieur 63 par rapport à son articulation au tronçon supérieur 62.

Les moyens moteurs 7 pour plier et deplier l'escalier comportent deux plateaux 77 et deux bielles 79, l'invention prévoit donc deux dispositifs de transmission de mouvement au tronçon inférieur 63 sur son articulation au tronçon supérieur 62.

Il va de soi que pour des raisons de clarté un seul de ces dispositifs sera décrit.

Ces dispositifs sont consitituués chacun par au moins deux câbles 97 et 98 dont au moins un permet le déploiement de la structure 5 et le ou les autres son repliement, par une poulie 99 montée coaxialement à l'articulation des tronçons 62 et 63 et sur laquelle sont fixés les extrémités des câbles 97 et 98, par le plateau 77 à la périphérie duquel se fixe l'autre extrémité des dits câbles et par des chemins de glissement 100 des câbles disposés entre la poulie 99 et le plateau 77.

De préférence le dispositif comporte deux paires de câbles 97 et 98 dont une permet le déploiement du tronçon inférieur 63 et dont l'autre permet son repliement.

La poulie 99 sur laquelle se fixe les extrémités des câbles 97 et 98 est disposée dans les limons 64 des tronçons inférieur 63 et supérieur 62 coaxialement à l'articulation de ceux-ci.

La poulie 99 comporte des gorges 101 dans lesquelles sont guidés les câbles 97 et 98.

Le plateau 77 comporte également sur sa périphérie des gorges 101 pour les câbles 97 et 98.

Les gorges 101 du plateau 77 et de la poulie 99 sont alignées les unes aux autres de manière que les câbles 97 et 98 soient parallèles au limon 64 et entre eux.

La rotation du plateau 77 doit également entraîner le déploiement et le repliement du tronçon inférieur 63.

Le sens de rotation du tronçon inférieur 63 sur son articulation est toujours inverse de celui du tronçon supérieur 62.

Il est donc nécessaire que le sens de rotation de la poulie 99 soit inverse à celui du plateau 77.

A cet effet la paire de câbles 97 s'enroule sur le plateau 77 et sur la poulie 99 dans le sens inverse à la paire de câbles 98 et s'enroule sur le plateau 77 dans le même sens que sur la poulie 99.

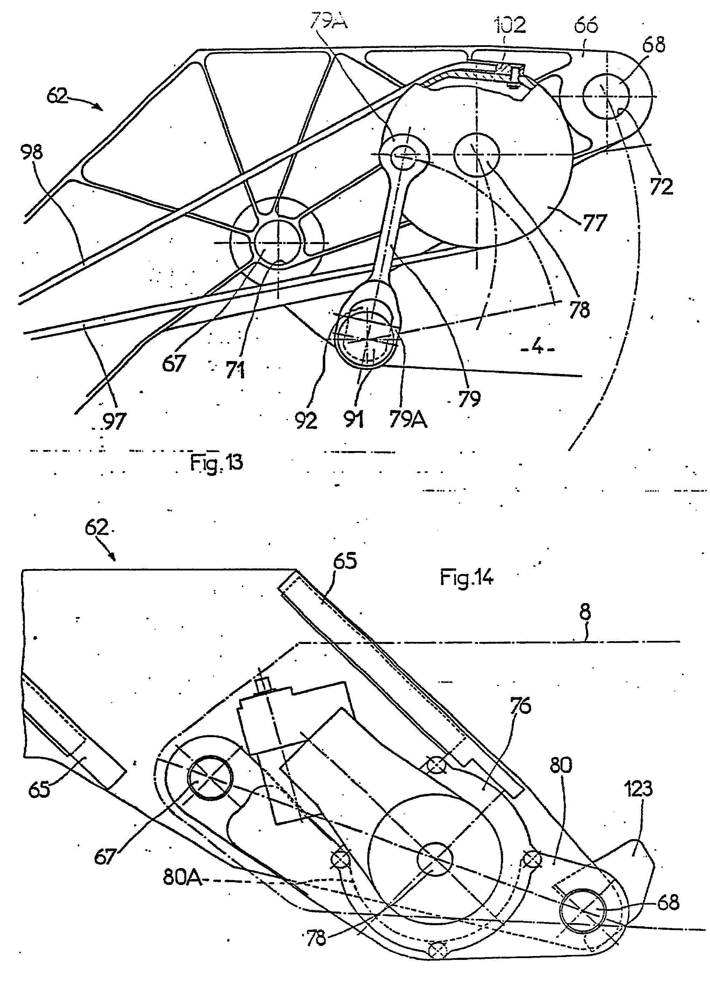

Les paires de câbles 97 et 98 sont fixés par paire dans des pièces 102 montées sur le plateau 77 et la poulie 99 par tous moyens connus par exemple par vissage (fig. 13).

Le lieu de fixation des pièces 102 sur le plateau 77 et la poulie 99 est déterminé suivant la course angulaire du plateau 77 correspondant au déploiement total de l'escalier.

Les câbles 97 et 98 sont tendus entre le plateau 77 et la poulie 99.

Le trajet des paires de câbles 97 et 98 n'étant pas rectiligne des chemins de glissement 100 guident les câbles dans le limon 64 entre le plateau 77 et la poulie 99.

Afin de ne pas plier les câbles 97 et 98 il est nécessaire que les chemins de glissement 100 aient un rayon de courbure grand.

A cet effet, les chemins de glissement 100 sont constitués par une pluralité de galets 103 dont les axes de rotation sont disposés sur un arc de cercle de rayon de courbure grand.

Les chemins de glissement 100 sont différents pour chaque paire de câbles 97 et 98 et sont avantageusement au nombre de deux pour chacune d'entre elles.

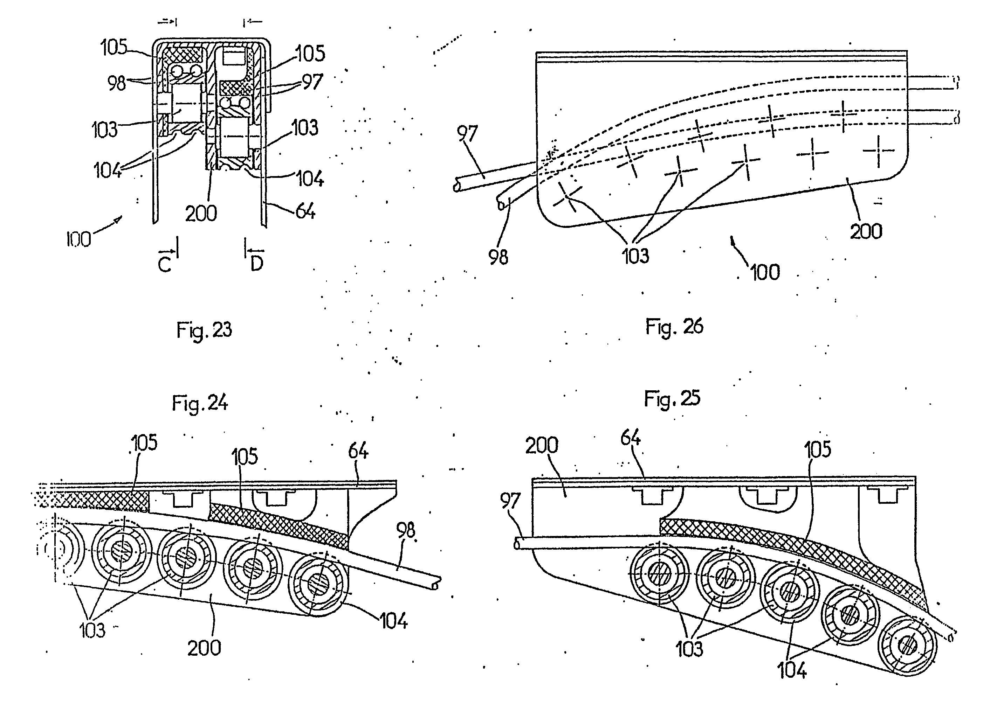

Les dits chemins de glissement sont disposés côte à côte tel que représenté aux figures 23 à 26 et les galets 103 ont un support central commun.

Les dits galets 103 sont pourvus chacun de deux gorges 104 dans lesquelles se logent les câbles.

Afin que les dits câbles ne puissent pas se déloger des gorges 104, des cales 105 solidaires du limon 64 maintiennent les câbles dans leur gorge 104.

Ces chemins de roulement sont montés dans des supports 200 fixés au limon 64.

Avantageusement chaque paire de câbles 97 et 98 comporte un tendeur de réglage de leur tension.

Ainsi lors de la rotation du plateau 77 pour plier ou déplier la structure d'escalier 5, il s'exerce sur une paire de câbles 97 ou 98 une traction qui entraîne la poulie 99 en rotation inverse à celle du plateau 77.

Cette rotation est favorisée par le poids du tronçon inférieur 63 lors du déploiement de la structure 5 d'escalier.

L'articulation entre les tronçons 62 et 63 est réalisée au niveau des limons 64 de chacun d'entre eux.

Chaque limon 64 du tronçon inférieur 63 est doté d'une patte 106 inclinée vers le bas formée de deux flancs 106A et chaque limon 64 du tronçon supérieur 62 est également doté d'une patte 107 inclinée vers le bas et également formée de deux flancs 107A.

De préférence la patte 106 s'emboîte avec jeu entre flancs 107A de la patte 107 du tronçon supérieur 62.

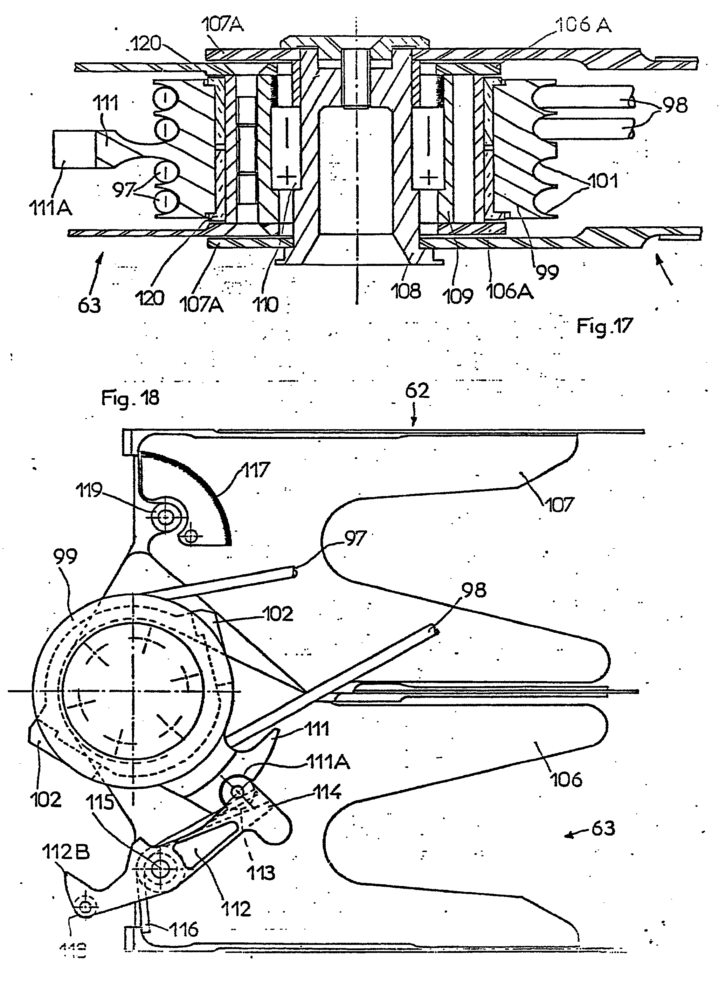

Comme représenté en figure 17, ces pattes 106 et 107 sont reliées en articulation par un moyeu 108 solidaire de la patte 107 du tronçon supérieur 62, par une bague 109 solidaire de la patte 106 du tronçon inférieur, par un roulement 110 monté entre le moyeu 108 et la bague 109 et par la poulie 99 sur laquelle s'enroulent les câbles 97 et 98 montée sur la bague 109.

Suivant une forme préférentielle de réalisation la poulie 99 n'entraîne pas directement le tronçon inférieur 63 en rotation en raison du fait que les tronçons 62 et 63 doivent être totalement déployés c'est-à-dire dans le prolongement l'un de l'autre avant que l'escalier n'entre en contact avec le sol.

La poulie 99 doit donc pouvoir patiner sur la bague 109 de l'articulation jusqu'à ce que le plateau 77 ait fini sa rotation, l'escalier pouvant déja être en contact avec le sol.

D'autre part pour des raisons de sécurité les tronçons supérieur 62 et inférieur 63 doivent être verrouillés entre eux.

A cet effet selon l'invention l'escalier entre les tronçons 62 et 63 est doté d'au moins un système d'entraînement et de verrouillage du tronçon inférieur 63 par rapport au tronçon supérieur 62.

De préférence l'escalier comporte un système d'entraînement et de verrouillage sur chacune des articulations réalisées entre les limons 64 des tronçons 62 et 63 telles que décrites plus haut.

Ce système d'entraînement et de verrouillage du tronçon inférieur 63 par rapport au tronçon supérieur 62, tel que représenté aux figures 16 et 18, est constitué par un poussoir 111 solidaire de la poulie 99, par un verrou 112 articulé sur le tronçon inférieur et coopérant avec le poussoir 111, par un organe d'actionnement et un organe de blocage du verrou 112 solidaire du tronçon supérieur 62, par un organe élastique de maintien en coopération du verrou avec les poussoirs 111 et par un montage en glissement de la poulie 99 dans l'articulation entre les tronçons 62 et 63.

Selon une forme préférentielle de réalisation le poussoir 111 est ménagé sur la poulie 99 entre les gorges 101 de celle-ci. Le dit poussoir fait partie intégrante de la poulie 99 mais il va de soi qu'il pourrait être rapporté sur la dite poulie et fixé par tout moyen connu par exemple vissage.

La surface supérieure du poussoir 111 avec laquelle le verrou coopère, comporte une encoche 111A et est arrondie suivant un rayon de courbure dont le centre est l'axe de rotation de la poulie 99.

De préférence l'encoche 111A est hémi-circulaire et est destinée à recevoir un galet 113 monté libre en rotation sur le pied 114 du verrou 112.

Le dit verrou est monté articulé sur le tronçon inférieur 63 sur un axe 115 transversal au limon 64 dans lequel se trouve le système d'entraînement et de verrouillage.

Le galet 113 est maintenu en contact avec le poussoir 111 par un organe de rappel élastique.

Cet organe de rappel est constitué de préférence par un ressort de torsion 116 exerçant une pression sur le galet 113 et l'extrémité avant du limon 64 et monté autour de l'axe d'articulation 115 du verrou 112.

Suivant une autre forme de réalisation l'organe de rappel peut être constitué par un ressort de compression monté entre le pied 114 du verrou 112 et le limon 64 du tronçon inférieur 63.

Tel que représenté en figure 18, lorsque la structure d'escalier est pliée le galet 113 est logée dans l'encoche 111A et y est maintenu par le ressort 116.

Dès que la poulie 99 est entraînée en rotation par la traction sur les câbles 97, le tronçon inférieur 63 est entraîné en rotation par le poussoir 111 qui exerce par l'intermédiaire du verrou 112 un couple sur le dit tronçon inférieur par rapport à l'articulation de celui-ci sur le tronçon supérieur 62.

Dans le cas où le plateau 77 serait stoppé dans sa rotation pour une raison indéterminée, le tronçon inférieur 63 resterait dans la position où il se trouvait au moment de l'arrêt car le galet 113 est maintenu dans l'encoche 111A du poussoir 111 et la poulie 99 ne peut tourner car les câbles 97 la retiennent.

Ainsi ce système d'entraînement présente une grande sécurité pour la protection de l'escalier et des utilisateurs.

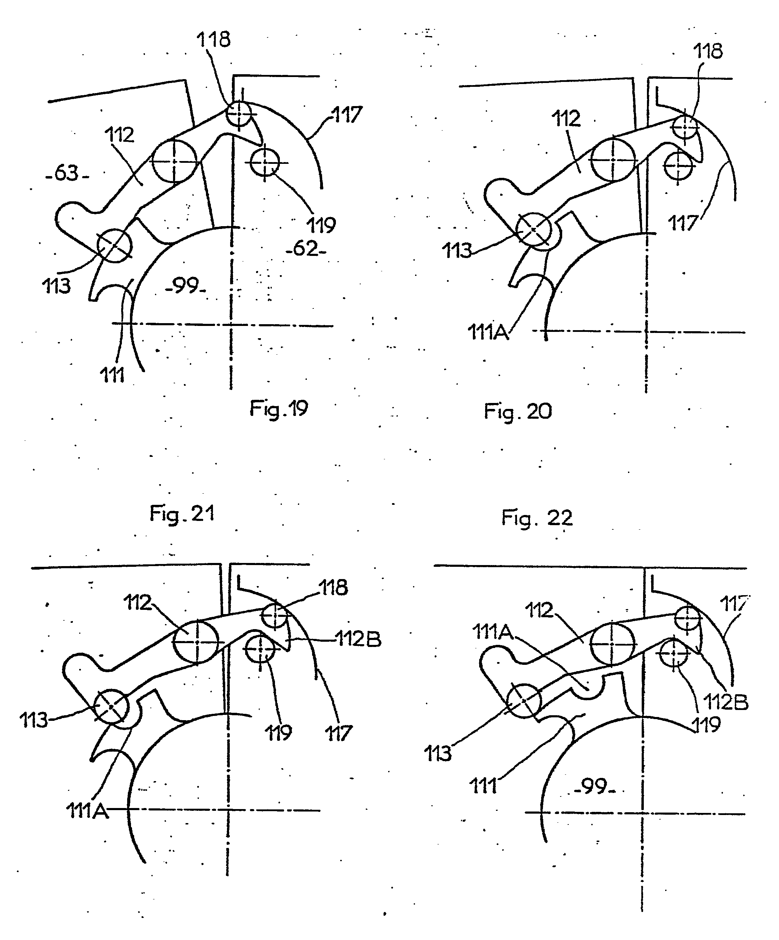

Lors du mouvement de déploiement le verrou 112, quand le tronçon inférieur 63 a atteint une certaine position angulaire par rapport au tronçon supérieur 62, est actionné en pivotement autour de son axe 115 par un organe d'entraînement d'actionnement et est bloqué par un organe d'actionnement et de blocage étant montés sur le tronçon supérieur 62 (fig. 19).

L'organe d'actionnement du verrou 112 est constitué par une rampe 117 montée sur le tronçon supérieur, présentant un profil en arc de cercle d'axe parallèle à l'axe d'articulation 115 du verrou 112 et sur laquelle vient rouler un galet 118 porté par la tête du verrou 112.

L'appui et le roulement du galet 118 se réalise lors du mouvement angulaire du tronçon inférieur 63 en phase de déploiement et provoque le basculement du verrou 112 autour de son axe 115 (fig. 20). Ce basculement entraîne la sortie du galet 113 de l'encoche 111A. La courbure de la rampe 117 est choisie de manière à provoquer de façon progressive la sortie du galet 113 de l'encoche 111A.

L'organe de blocage du verrou 112 est constitué par une barre 119 parallèle à l'axe 115 du dit verrou et située en regard de la rampe 117 sous le tronçon supérieur 62.

La tête du verrou 112 comporte un bec 112B passant entre la rampe 117 et la barre 119 lors du mouvement angulaire du tronçon inférieur 63. La surface de contact du poussoir 111 avec le verrou 112 est moins grande au fur et à mesure de la sortie du galet 113 de l'encoche 111A.

L'entraînement du tronçon inférieur 63 continue toutefois de se faire, la force exercée par le ressort 116 augmentant. A partir d'une certaine position angulaire entre tronçon, le bec 112B entre en contact avec la barre 119, le galet 119 étant toujours en contact avec la rampe 116.

Le verrouillage du tronçon inférieur 63 est réalisé lorsque le contacteur entre la barre 119 et le bec 112B est au delà de la ligne passant par l'axe d'articulation de tronçons 62 et 63 et l'axe de la barre 119 et que l'axe du galet 118 est également au delà de cette ligne (fig. 21).

Le mouvement du verrouillage correspond à une rotation de la poulie 99 d'environ 180°. A cet instant là les limons ne sont cependant pas encore en alignement et le galet 113 n'est pas encore tout à fait sortie de l'encoche 111A.

La rotation de la poulie 99 continue, le contact entre le bec 112B du verrou et la barre 119 étant maintenu. Les tronçons 62 et 63 viennent en butée l'un contre l'autre ce qui correspond à la fin du verrouillage et à la sortie totale du galet 113 de l'encoche 111A (fig. 22). Cependant la poulie 99 continue sa rotation car le plateau 77 est toujours entraîné en rotation même si l'escalier est déjà en contact avec le sol. La poulie 99 est donc montée sur la bague 109 de l'articulation sur un élément de glissement ou de roulement lui permettant de finir sa rotation alors que les tronçons sont bloqués. De préférence la poulie 99 est montée sur des coussinets 120 bloqués sur la bague 109. Ce système d'entraînement et de verrouillage du tronçon inférieur 63 sur le tronçon supérieur 62 permet de s'assurer que les dits tronçons sont en alignement l'un avec l'autre et verrouillés l'un à l'autre avant que l'escalier ne touche le sol. Lors du repliement de la structure, le mouvement angulaire du tronçon inférieur 63 par rapport au tronçon supérieur 62 ne commence que lorsque le galet 113 du verrou 112 est dans l'encoche 111A du poussoir 111, c'est-à-dire lorsque la poulie 99 a effectué une légère rotation par rapport à la bague 109 ou encore lorsque le plateau 77 a tourné et a déjà commencé à entraîner le structure 5 d'escalier donc à décoller le dit escalier du sol.

Au moment de l'arrêt de la rotation du plateau 77 dans la phase de repliement commandé par le contacteur 96 et la came 96A le tronçon inférieur 63 se trouve plaqué sous le tronçon supérieur 62.

Comme énoncé plus haut la structure d'escalier 5 est dotée de deux garde corps latéraux 121.

Sous l'action de la rotation relative des deux tronçons d'escalier, lors du pliage ou du déploiement, les deux gardes corps 121 se plient ou se déploient simultanément au pliage ou au déploiement de la structure 5. De préférence chaque garde corps 121 est constitué par une main courante en deux tronçons de mains courantes articulés l'un à l'autre, un tronçon supérieur 201 et un tronçon inférieur 202, par une lisse intermédiaire en deux tronçons de lisses articulés l'un à l'autre, un tronçon supérieur 203 et un tronçon inférieur 204, par deux montants supérieurs 205 et 206 articulés au tronçon d'escalier supérieur 62, au tronçon supérieur de main courante 201 et au tronçon supérieur de lisse intermédiaire 203 et par un montant inférieur 207 articulé au tronçon inférieur d'escalier 63 et aux tronçons inférieurs de main courante 202 et de lisse intermédiaire 204. Lorsque la structure est déployée le tronçon inférieur de lisse intermédiaire vient se disposer dans le prolongement du tronçon supérieur de lisse. Les montants 205 et 206 viennent se disposer quant à eux de manière perpendiculaire au tronçon supérieur d'escalier 62.

Le montant inférieur 207 est de préférence incliné vers l'avant par rapport au tronçon inférieur 63 d'escalier. Lorsque la structure d'escalier se plie le tronçon inférieur de main courante, le tronçon inférieur de lisse intermédiaire se replient sous le tronçon supérieur de main courante et de lisse intermédiaires. De plus en fin de pliage les tronçons supérieurs et inférieurs de main courante et de lisse et les montants 205, 206 et 207 viennent se disposer latéralement aux tronçons d'escalier 62 et 63.

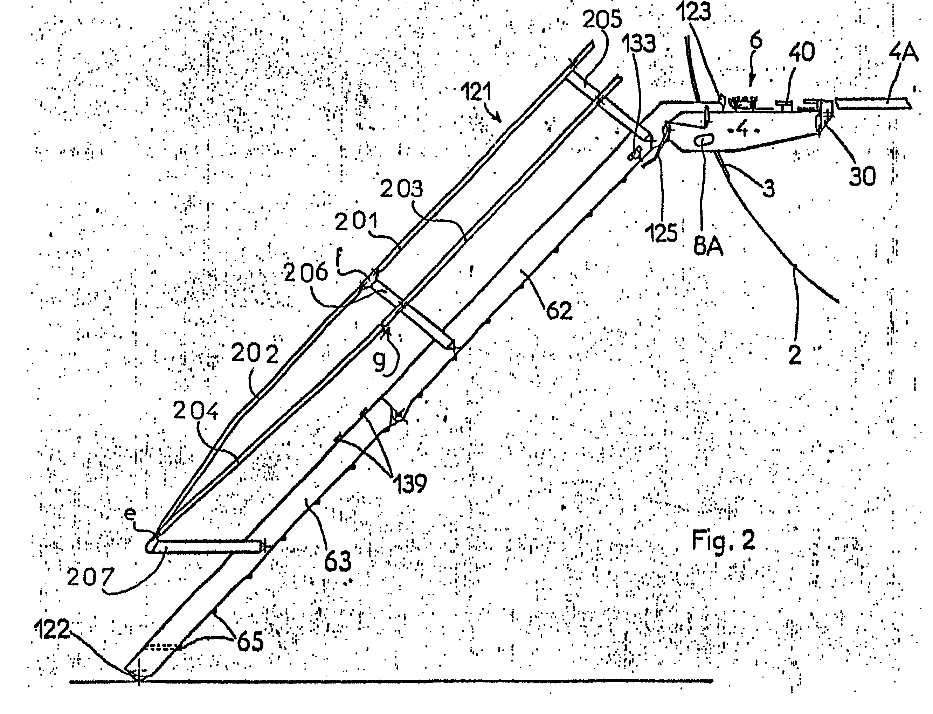

Les montants 205 et 206 sont articulés par leur extrémité inférieure au tronçon supérieur 62. Comme on le voit en figure 2 le point d'articulation de chaque montant au tronçon supérieur est écarté de l'axe d'articulation entre tronçons c'est-à-dire est écarté de l'extrémité inférieure du tronçon supérieur 63.

Par leur extrémité supérieure les montants 205 et 206 sont articulés au tronçon supérieur 201 de main courante. Entre le tronçon 201 supérieur de main courante et le tronçon supérieur d'escalier, 62, les montants 205 et 206 reçoivent en articulation le tronçon supérieur 203 de lisse intermédiaire. Le tronçon supérieur de main courante 201, le tronçon supérieur de lisse 203, le tronçon supérieur d'escalier 62 définissent avec les montants 205 et 206 un parallélogramme déformable qui lors du pliage de la structure se déforme vers l'axe d'articulation entre tronçons. Le tronçon inférieur 204 de la lisse intermédiaire est plus court que le tronçon inférieur 202 de main courante.

Les extrémités inférieures de ces deux tronçons sont articulées l'une à l'autre et en extrémité supérieure du montant 207. L'extrémité supérieure du tronçon de main courante 202 et l'extrémité inférieure du tronçon de main courante 201 sont articulées l'une à l'autre et en extrémité supérieure du montant supérieur situé au 5 plus près de l'axe d'articulation c'est-à-dire le montant 206.

De plus le tronçon inférieur 204 de lisse est articulé au tronçon supérieur de lisse 203 en un point situé entre le point d'articulation de ce dernier tronçon au montant 206 et entre le point d'articulation au montant 207.

D'une autre manière la lisse intermédiaire présente entre le montant 207 et le montant 206 une brisure.

Le tronçon inférieur de main courante 202 et le tronçon inférieur de lisse intermédiaire 204 forment chacun un des côtés d'un triangle déformable à base fictive, cette base fictive étant délimitée par le point d'articulation du tronçon de lisse inférieur au tronçon de lisse supérieur et par le point d'articulation du tronçon de main courante inférieur au tronçon de main courante supérieur. Le point d'articulation des deux tronçons inférieurs 202 et 204 étant désigné e, le point d'articulation du tronçon 202 au tronçon 201 étant désigné f et le point d'articulation du tronçon de lisse 204 au tronçon 203 étant désigné g on va expliquer le pliage des gardes corps 121.

Lorsque le tronçon d'escalier 63 se plie sous le tronçon d'escalier 62 un effort de traction est exercé sur le point d'articulation e par l'intermédiaire du montant 207, ce qui provoque la déformation simultanée du triangle e f g et du parallélogramme déformable formé par les tronçons supérieurs de main courantes 201, de lisse 203 et des montants 205 et 206.

Lors de cette déformation les tronçons 201 et 203 se rapprochent du tronçon d'escalier supérieur 62 suivant un mouvement de translation circulaire. Lors de ce mouvement, le point g, par rotation autour du montant 206, se rapproche du point f et la base fictive g f du triangle déformable e, f, g diminue de longueur. Cette diminution de longueur en combinaison avec le mouvement de rotation du point f par rapport au tronçon supérieur d'escalier 62 force le sommet e du triangle déformable e, f, g à se déplacer vers le bas pour, par la suite, en fin de pliage, venir se disposer sous le tronçon d'escalier supérieur latéralement au tronçon d'escalier inférieur. Il y a lieu de noter qu'en fin de pliage les montants 205 et 206 viennent se disposer parallèlement au tronçon d'escalier supérieur et que le point d'articulation f vient se disposer en avant de l'axe d'articulation entre tronçons.

Pour que le sommet du triangle e puisse venir se disposer sous le tronçon d'escalier supérieur latéralement au tronçon d'escalier inférieur, il faut que la longueur du côté e, f diminuée de la distance entre f et le point d'articulation du tronçon 203 au montant 206 soit égale ou très peu supérieure à la longueur du côté e g diminuée de la distance entre g et le point d'articulation du tronçon 203 au montant 206.

De plus il est nécessaire que le point e, que le point d'articulation du montant 207 au tronçon inférieur 63 et que le point d'articulation du tronçon inférieur d'escalier 63 au tronçon supérieur 62 ne soit jamais alignés pour éviter tous coincements.

Il y a lieu de noter que grâce à cette configuration le garde-corps ne se déforme que lorsque les tronçons d'escalier se plient ou se déploient.

Avantageusement lorsque la structure d'escalier est entièrement déployée, les dits gardes corps sont reliés au cadre de la porte d'accès dans le véhicule par des éléments téléscopiques (non représentés)

Lors du déploiement dès que le contacteur 95 est actionné par la came 95A, le moteur 76 s'arrête et est freiné, l'escalier étant en contact avec le sol par au moins une roulette 122 montée libre en rotation sur l'extrémité inférieure du tronçon inférieur 63. L'actionnement du contacteur 96 provoque également la mise en circuit de l'éclairage de l'escalier commandé ensuite manuellement.

La dernière manoeuvre effectuée dans la phase de déploiement est la mise en place sur le cadre de la porte d'accès des éléments téléscopiques des garde corps 121.

Avantageusement lorsque la structure est déployée le chariot 4 sur lequel la dite structure est montée est bloquée en coulissement dans le sens de son entrée par des moyens de blocage.

Ces moyens de blocage sont constitués selon une forme préférentielle par une butée 123 portée par la structure 5 d'escalier et par un galet 124 monté dans le compartiment 1 du véhicule en regard duquel se place la butée 123 en position déployée. De préférence la butée 123 est montée sur l'axe 68 de la structure 5 entretoisant les limons 64 du tronçon supérieur 62. Cette butée 123 est avantageusement placée dans l'axe médian de la dite structure. Le galet 124 est de préférence monté sur l'extrémité avant de la glissière centrale 21. Lors du basculement de la structure, la butée 123 vient se placer en avant du galet 124.

De préférence un jeu est maintenu entre la butée et le galet afin de permettre une certaine souplesse dans le sens axial de l'escalier par rapport au compartiment.

Dans le cas où le chariot 4, en raison de mauvais réglage, ne serait pas assez avancé dans le compartiment lors du déploiement, la butée 123 vient en appui sur le galet 124 et pousse le chariot 4 vers l'avant vers sa position correcte.

La phase de repliement de l'escalier est commandée par la rentrée des éléments téléscopiques des gardes corps 121. A cet effet un contacteur est monté dans chaque élément téléscopique et est actionné lors de la remise en place dans les garde corps des dits éléments téléscopiques. A cet instant-là le moteur 76 est mis en fonctionnement ce qui provoque le repliement de la structure 5 d'escalier et donc par voie de conséquence l'effacement de la butée 123 de blocage de recul du chariot 4.

Lorsque le contacteur 95 est actionné par la came 95A le moteur 76 s'arrête et se freine. A cet instant là la structure d'escalier est hors du véhicule et dans le prolongement du compartiment 1 et est donc prête à rentrée dans le dit compartiment.

Cependant afin de diminuer les efforts exercés par le poids du tronçon inférieur 63 sur son articulation au tronçon supérieur 62 et afin d'éviter leur écartement il est nécessaire de maintenir le dit tronçon inférieur contre le dit tronçon supérieur lors du mouvement de rentrée de la structure 5 dans le compartiment 1.

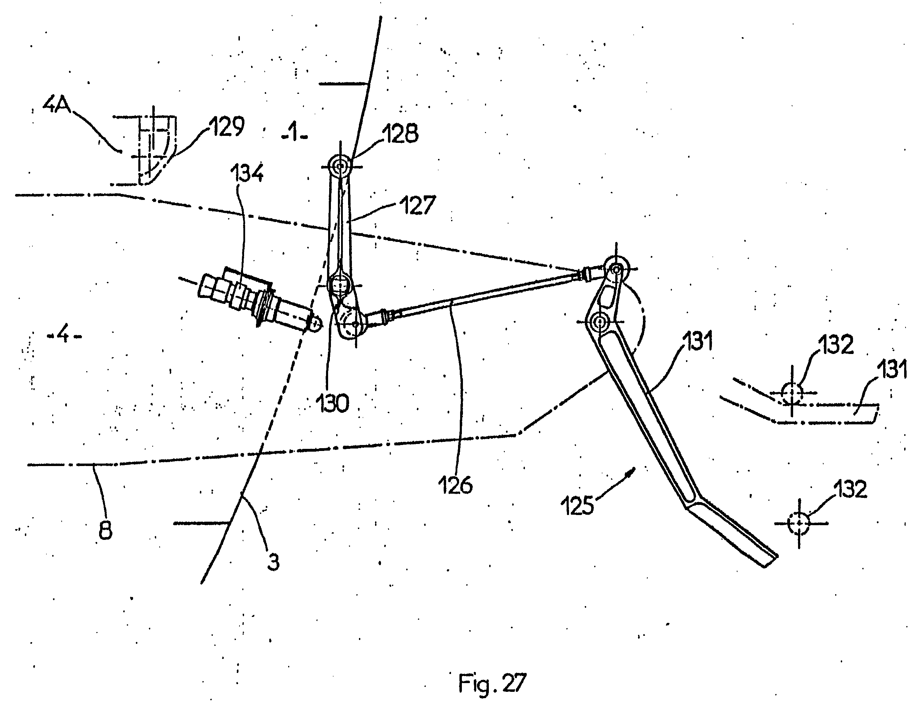

A cet effet comme illustré en figure 27, il est prévu un berceau 125 articulé au chariot 4 sur un axe transversal au sens de déplacement de ce dernier, venant, par pivotement vers le haut, soutenir l'extrémité libre du tronçon inférieur 63 et verrouiller les deux tronçons 62 et 63 l'un à l'autre.

De préférence le mouvement de pivotement du berceau 125 vers le haut est créé par le mouvement de rentrée du chariot dans le compartiment.

A cet effet, le berceau 125 est prolongé au delà de son axe par une chape pour recevoir en articulation l'extrémité d'une tringle 126 dont l'autre extrémité est articulée en extrémité inférieure d'un levier pivotant 127 articulé au chariot 4. Le système de tringle et levier est situé en arrière du berceau 125. L'extrémité supérieure du levier 127 est terminée par un galet 128 qui lors du mouvement de rentrée de l'escalier coopère tout d'abord avec une rampe 129 inclinée disposée en partie supérieure de l'entrée du compartiment 1.

De préférence cette rampe 129 est montée sur l'extrémité avant des rails latéraux 4A.

Cette rampe 129 a pour effet de forcer le levier 127 à pivoter autour de son axe d'articulation ce qui provoque le mouvement de pivotement du berceau 125 vers le haut, lequel par conséquent peut venir soutenir l'extrémité libre du tronçon inférieur 63.

Par la suite le galet 128 du levier 127 coopère avec le dessous du rail 4A latéral du compartiment 1. Ce rail a pour but de maintenir le levier 127 incliné ce qui permet d'assurer le verrouillage angulaire des deux tronçons 62 et 63 lorsqu'ils sont dans le compartiment.

Avantageusement la longueur de la tringle 126 est réglable de façon à pouvoir régler la pression du berceau 125 sur l'extrémité du tronçon inférieur 63.

On comprend que le déverrouillage de la position pliée des tronçons 62 et 63 ne peut intervenir que lorsque l'escalier plié est extrait du compartiment 1 et que lorsque le levier 127 n'est plus maintenu par la rampe 126.

Pour faciliter ce déverrouillage il est prévu un organe élastique de rappel qui a pour fonction d'assurer le pivotement vers le bas du berceau 125 et donc d'écarter suffisamment ce dernier de l'extrémité libre du tronçon inférieur 63 pour ne pas s'opposer à son déploiement.

De préférence cet organe élastique est un ressort de torsion 130 monté sur l'axe d'articulation du levier 127 au chariot 4 et coopérant avec ces derniers. Selon une forme préférentielle de réalisation le berceau 125 est articulé au chariot 4 sur les flancs 8 de celui-ci et suivant l'axe d'articulation du tronçon supérieur 62 sur le dit chariot 4.

Suivant toujours une forme préférentielle de réalisation le berceau 125 est constitué par une paire de bras 131 latéraux au chariot 4. Chacun de ces bras 131 coopérant avec un levier 127 et un seul.

Les bras 132 étant articulés à l'extérieur du chariot 4 ceux-ci se resserent l'un vers l'autre.

De préférence l'extrémité libre de chacun de ces bras 131 coopère en appui avec un galet 132 latéral au tronçon inférieur 63 et coaxial aux roulettes 122 d'appui que comporte ce tronçon.

Afin de s'assurer que l'escalier est replié avant qu'il ne pénètre dans le compartiment 1, le dit escalier est doté d'un dispositif de vérification du repliement des tronçons l'un contre l'autre, apte à bloquer l'entrée de l'escalier dans le compartiment en cas d'anomalie.

Ce dispositif de vérification comporte un contacteur 133 monté sur le tronçon supérieur 62 et apte à détecter la présence du tronçon inférieur 63 contre le tronçon supérieur et par un autre contacteur 134 détectant l'actionnement du contacteur 133 après verrouillage par le berceau 125 et commandant l'arrêt de l'entrée de l'escalier dans le compartiment 1 dans le cas où le contacteur 133 n'est pas actionné.

Le contacteur 134 est monté sur le chariot 4 et est actionné par le levier 127 lorsque celui-ci s'incline pendant l'entrée de l'escalier dans le compartiment (fig. 27). Si le contacteur 133 n'est pas actionné malgré le mouvement du berceau 125, le contacteur 134 donne l'ordre à l'organe moteur 6 d'entraînement du chariot de s'arrêter.

Dans le cas où le contacteur 133 est actionné, l'entrée de l'escalier se fait normalement.

De préférence un contacteur 133 est monté sur chaque limon 64 du tronçon supérieur et un contacteur 134 est présent en arrière de chaque levier 127 d'actionnement du berceau 125.

L'entrée de l'escalier dans le compartiment a été commandée lors de l'actionnement du contacteur 95 qui a simultanément arrêté le moteur 76 et qui donne l'ordre au moteur 18 de fonctionner.

L'axe de l'escalier est placé parallèlement à l'axe du compartiment par le dispositif de remise en position de l'escalier lors de son entrée monté à l'arrière du chariot.

Le chariot 4 est ensuite verrouillé en position rentrée. La détection du verrouillage du chariot en position rentrée par le contacteur 45A provoque avantageusement la fermeture de la trappe du compartiment 1.

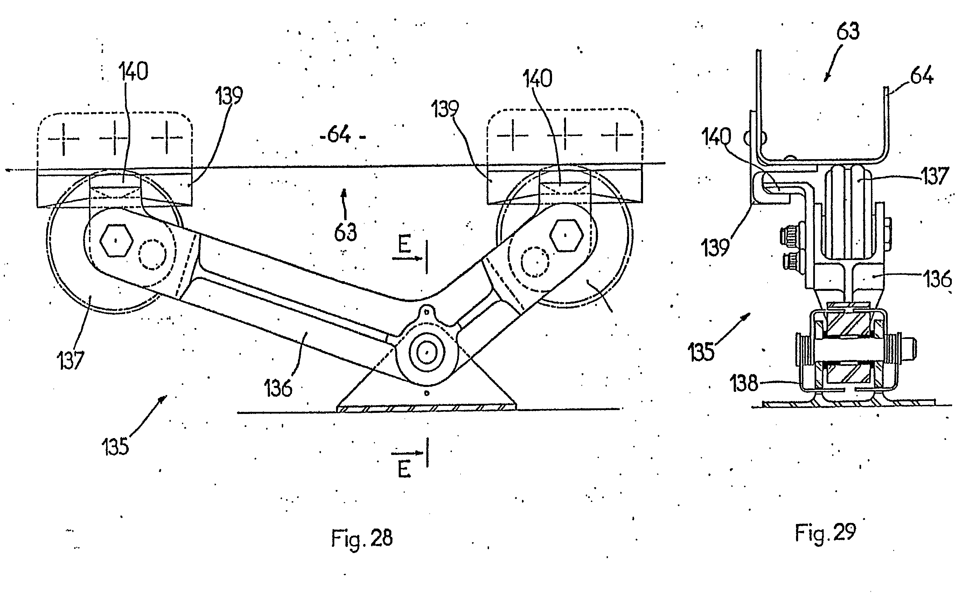

Selon une autre caractéristique selon l'invention afin de soulager le chariot du porte à faux de la structure d'escalier et afin de bloquer celle-ci latéralement, dans le compartiment et en partie inférieure de celui-ci est monté au moins un palonnier 135 coopérant avec des organes de blocage montés sur l'extrémité de la structure lorsque celle-ci est pliée. Tel que représenté aux figures 28 et 29, le palonnier 135 est constitué par une fourche 136 à deux branches portant chacune à leur extrémité une roulette 137, la dite fourche étant articulée en chape sur la partie inférieure du compartiment 1.

Avantageusement un ressort 138 maintient les roulettes 137 sur un même niveau parallèle aux rails 4A du chariot 4.

Sur les roulettes 137 vient rouler le limon 64 du tronçon inférieur 62.

Sur ce tronçon inférieur 62 sont fixés les organes de blocage de l'extrémité de la structure 5.

Ces organes de blocage sont constitués par des crochets 139 fixés au limon 64 dans lesquels viennent se placer des languettes 140 fixes aux branches de la fourche 136 au niveau des roulettes 137.

Les crochets 139 et les languettes 140 ont une forme permettant de supporter avec les roulettes 137 s'appuyant sur le limon 64 une grande partie du poids de l'escalier.

De plus les languettes 140 viennent en contact avec le fond des crochets 139 pour bloquer latéralement l'extrémité avant de l'escalier. De préférence deux palonniers 135 sont montés dans le compartiment 1.

Ainsi l'escalier à l'intérieur du compartiment est bien soutenu et bloqué et le chariot 4 est largement soulagé des efforts du montage en porte à faux du dit escalier. Les éléments moteurs de l'escalier sont alimentés de préférence en énergie électrique et comportent une commande manuelle facilement accessible.

L'escalier repliable pour véhicule selon l'invention permet d'obtenir sur le dit escalier une grande sécurité pour les utilisateurs, de protéger le dit escalier en lui donnant une certaine souplesse dans ses liaisons avec le véhicule et accroissent la vitesse des manoeuvres effectuées sur l'escalier.

**Revendications**

1. Escalier repliable pour véhicule comportant un chariot (4) monté en coulissement sur des rails (4A) dans un compartiment (1), une structure repliable (5) d'escalier montée en porte à faux sur le chariot (4), un organe moteur (6) pour actionner le dit chariot dans le compartiment et des moyens moteurs (7) pour plier et déplier suivant un plan vertical la structure (5) lorsque cette dernière est hors du compartiment, caractérisé en ce que l'organe moteur (6) est constitué par un ensemble pignon-crémaillère (14) et par un dispositif (15) de réglage du jeu de l'ensemble pignon-crémaillère et de guidage du chariot (4) constitué par un jeu de trois galets (20) solidaires du dit chariot et par une glissière (21) en U fixée parallèlement à la crémaillère (16) et sur la partie supérieure du compartiment (1) et destinée à recevoir le jeu de galets (20).

2. Escalier selon la revendication 1, caractérisé en ce que le galet central (20A) du jeu de galets (20) est monté sur une excentrique (23) réglable et est maintenu en contact avec une face interne de la glissière (21) et en ce que l'axe du dit galet central est aligné avec l'axe du pignon (17) et le point de tangence de ce dernier avec la crémaillère (16) afin de régler le jeu dans l'ensemble pignon-crémaillère (14).

3. Escalier selon la revendication 1, caractérisé en ce que les galets (20B) sont en appui sur la face opposée de la glissière parallèle à celle contre laquelle s'appuie le galet central (20A) et en ce que au moins un des galets (20B) est monté sur un excentrique (24) réglable afin de régler le jeu de fonctionnement des galets dans la glissière (21).

4. Escalier selon les revendications 1 et 2, caractérisé en ce qu'il est doté de moyens permettant la variation de la position angulaire de l'axe longitudinal du dit escalier par rapport à l'axe longitudinal du compartiment (1) et autour d'un axe de rotation vertical et de moyens de guidage du chariot (4) par rapport aux rails latéraux (5) montés à l'arrière du dit chariot.

5. Escalier selon les revendications 1 et 4, caractérisé en ce que les moyens permettant la variation angulaire de l'axe longitudinal de l'escalier sont constitués par le montage en articulation du chariot (4) par rapport à un axe vertical du dispositif du réglage du jeu de l'ensemble pignon-crémaillère (14) et de guidage latéral du chariot (4).

6. Escalier selon les revendications 1 et 4, caractérisé en ce que les moyens de guidage par rapport aux rails latéraux (4A) montés à l'arrière du chariot (4) et de chaque côté de celui-ci sont constitués chacun par deux galets (27) destinés à rouler contre la face verticale d'un rail (4A) et par un corps (28) supportant les dits galets et s'articulant suivant un axe vertical sur le chariot (4).

7. Escalier selon les revendications 1 et 4, caractérisé en ce qu'il comprend des moyens permettant un basculement latéral relatif entre l'axe longitudinal de l'escalier et l'axe longitudinal du véhicule et des moyens pour ramener le dit axe longitudinal de l'escalier parallèle à l'axe du compartiment (1) lors de la rentrée du dit escalier dans le dit compartiment.

8. Escalier selon les revendications 1, 4, 7, caractérisé en ce que les moyens de basculement latéral et de remise en position de l'escalier dans le compartiment (1) sont constitués par une encoche (29) ménagée dans la face verticale du rail (4A) en regard de laquelle se trouve, lorsque le chariot (4) est en fin de course, le galet (27) avant du dispositif de guidage latéral arrière du dit chariot et par le montage en articulation du corps (22) support du jeu de galets (20) sur le chariot (4).

9. Escalier selon les revendications 1 et 7, caractérisé en ce que les moyens permettant le basculement relatif de l'axe de l'escalier par rapport au véhicule sont dotés chacun d'un dispositif déterminant un seuil d'effort au delà duquel le basculement est permis.

10. Escalier selon la revendication 9, caractérisé en ce que ce dispositif déterminant le seuil d'effort est constitué par une came (35) fixée au corps (28) portant les galets (27), par une roue (36) articulée sur le chariot (4) et roulant contre la came (35) et par un ressort (37) de compression réglable fixé au dit chariot maintenant la roue (36) appuyée contre la came (35).

11. Escalier selon la revendication 1, caractérisé en ce qu'il est doté d'au moins un moyen d'immobilisation en coulissement du chariot (4) dans le compartiment (1) en position rentrée.

12. Escalier selon les revendications 1 et 11, caractérisé en ce que le moyen d'immobilisation est constitué par un ergot (39) fixé à l'extrémité arrière de la glissière centrale (21) et par un dispositif de verrouillage (40) fixé sur le chariot et destiné à venir coopérer avec l'ergot (39).

13. Escalier selon la revendication 12, caractérisé en ce que le dispositif de verrouillage (40) est constitué par un verrou (42) articulé destiné à recevoir l'ergot (39), par un levier (43) articulé commandant le verrou (42), par un organe d'entraînement (44) du levier (43) et par au moins un contacteur (45) détectant l'état de verrouillage du dispositif (40).

14. Escalier selon la revendication 13, caractérisé en ce que sur l'articulation du verrou (42) est monté un capot (50) dans lequel se place l'extrémité du verrou doté d'un décrochement (47) en position déverrouillée sous l'effet d'un ressort (51), que le décrochement (47) en position déverrouillée sous l'effet d'un ressort (51) reçoit en position verrouillée un galet (48) porté par le levier (43) articulé et que le capot (50) en position déverrouillée vient obturer le décrochement (47) afin que le galet (48) ne vienne pas s'y loger.

15. Escalier selon la revendication 13 ou 14, caractérisé en ce que l'organe d'entraînement (44) du levier (43) est constitué par un électro-aimant qui est excité lors de la commande de déverrouillage ce qui provoque le retrait du galet (48) du décrochement (47) du verrou (42) et l'obturation du décrochement par le capot (50) et qui est relaché lorsque le chariot (4) a atteint une certaine position dans le compartiment (1).

16. Escalier selon la revendication 13, caractérisé en ce que le dispositif d'immobilisation comporte un contacteur (45A) porté par le dispositif de verrouillage (40) et actionné par le levier (43) de commande du verrou (42) qui d'une part donne l'ordre à l'organe moteur (6) de fonctionner en détectant le déverrouillage et d'autre part provoque la fermeture de la trappe du compartiment (1) en détectant le verrouillage et comporte un contacteur (45B) porté par le chariot (4) et actionné par une came (56) fixée au compartiment (1) qui donne l'ordre de relachement de l'électro-aimant lorsqu'il est actionné.

17. Escalier selon la revendication 1 dont la structure (5) repliable est articulée entre les flancs (8) du chariot (4) et comportant des moyens moteurs (7) pour plier et déplier la dite structure caractérisé en ce que les moyens moteurs (7) sont constitués par un moteur (76) porté par la structure (5) d'escalier, par au moins un plateau (77) circulaire solidaire d'un arbre de sortie (78) du moteur et par au moins une bielle (79) articulée entre le plateau (77) et un flanc latéral (8) du chariot (4) et parallèlement au limon (64).

18. Escalier selon la revendication 17, caractérisé en ce que le pied (79B) de la bielle (79) est doté d'un orifice oblong (92) allongé dans l'axe de la dite bielle, lequel orifice oblong (92) reçoit un plot (91) solidaire d'un flanc (8) du chariot (4).

19. Escalier selon la revendication 17 dont la structure (5) est constituée d'un tronçon supérieur (62) et d'un tronçon inférieur (63) articulé l'un à l'autre et dont les moyens moteurs (7) comportent au moins un dispositif de transmission de mouvement au tronçon inférieur (63) par rapport à son articulation au tronçon supérieur (62), caractérisé en ce que ces dispositifs sont constitués chacun par au moins deux câbles (97) et (98) dont au moins un permet le déploiement de la structure (5) et le ou les autres sont repliement, par une poulie (99) montée coaxialement à l'articulation des tronçons (62) et (63) et sur laquelle sont fixées les extrémités des câbles (97) et (98), par le plateau (77) à la périphérie duquel se fixe l'autre extrémité des dits câbles et par des chemins de glissement (100) des câbles disposés entre la poulie (99) et le plateau (77).

20. Escalier selon la revendication 19, caractérisé en ce que les chemins de glissement (100) des câbles (97) et (98) sont constitués par une pluralité de galets (103) dont les axes de rotation sont disposés sur un arc de cercle de rayon de courbure grand.

21. Escalier selon la revendication 19, caractérisé en ce que entre les tronçons (62) et (63) le dit escalier est doté d'au moins un système d'entraînement et de verrouillage du tronçon inférieur (63) par rapport au tronçon supérieur (62).

22. Escalier selon la revendication 21, caractérisé en ce que le système d'entraînement et de verrouillage du tronçon inférieur (63) par rapport au tronçon supérieur (62) est constitué par un poussoir (111) solidaire de la poulie (99), par un verrou (112) articulé sur le tronçon inférieur et coopérant avec le poussoir (111), par un organe d'actionnement et un organe de blocage du verrou (112) solidaire du tronçon supérieur (62), par un organe élastique de maintien en coopération du verrou avec le poussoir (111) et par un montage en glissement de la poulie (99) sur l'articulation entre les tronçons (62) et (63).

23. Escalier selon la revendication 22, caractérisé en ce que la surface supérieure du poussoir (111), avec laquelle le verrou coopère, comporte une encoche (111A) recevant un galet (113) monté sur le pied (114) du verrou (112) et est arrondie suivant un rayon de courbure dont le centre est l'axe de rotation de la poulie (99).

24. Escalier selon la revendication 22, caractérisé en ce que l'organe d'actionnement et de blocage du verrou (112) est constitué par une rampe (117) montée sur le tronçon supérieur (62) présentant un profil en arc de cercle d'axe parallèle à l'axe d'articulation du verrou (112) et sur laquelle vient rouler un galet (118) porté par la tête du verrou et par une barre (119) parallèle au dit axe d'articulation du verrou (112) montée en regard de la rampe (117) sur le tronçon supérieur (62) et contre lequel vient s'appuyer le bec (112B) du verrou (112).

25. Escalier selon les revendications 19, 21 et 22, caractérisé en ce que la poulie (99) est montée libre en rotation sur des coussinets (120) bloqués sur l'articulation entre les tronçons (62) et (63).

26. Escalier selon la revendication 19 comprenant une structure (5) d'escalier repliable constituée notamment par deux garde-corps (121) comprenant chacun une main courante en deux tronçons (201) et (202), une lisse intermédiaire en deux tronçons (203) et (204), deux montants (205) et (206) supérieurs articulés au tronçon d'escalier supérieur (62) et un montant (207) inférieur articulé au tronçon d'escalier inférieur (63), escalier caractérisé en ce que. le tronçon inférieur de lisse intermédiaire est plus court que le tronçon de main courante inférieur, que les extrémités inférieures de ces deux tronçons sont articulées l'une à l'autre et en extrémité supérieure du montant (207), que l'extrémité supérieure du tronçon de main courante (202) et l'extrémité inférieure du tronçon de main courante (201) sont articulées l'une à l'autre et en extrémité supérieure du montant supérieur situé au plus près de l'axe d'articulation entre tronçons, c'est-à-dire, le montant (206) et que le tronçon inférieur de lisse intermédiaire est articulé au tronçon supérieur de lisse intermédiaire en un point situé entre le point d'articulation au montant (207) de manière à ce que les tronçons (202) et (204) constituent les côtés d'un triangle déformable à base fictive dont le sommet articulé au montant (207) vient lors du pliage se disposer sous le tronçon supérieur d'escalier (62).

27. Escalier selon la revendication 26, caractérisé en ce que les points d'articulation des montants (205) et (206) au tronçon d'escalier supérieur (62) sont écartés de l'extrémité inférieure du tronçon supérieur et donc de l'axe d'articulation entre tronçons.

28. Escalier selon la revendication 26, caractérisé en ce que le tronçon supérieur de lisse (203), le tronçon d'escalier (62) définissent avec les montants (205) et (206) un parallélogramme déformable qui, lors du pliage de la structure (5) se déforme vers l'axe d'articulation entre tronçons.

29. Escalier selon la revendication 26, comportant des gardes-corps (121) dotés d'éléments télescopiques se rattachant au cadre de la porte d'accès caractérisé en ce que un contacteur est monté dans chaque élément télescopique et est actionné lors du repliement des éléments télescopiques afin de donner l'ordre de commencement de la phase de repliement de la structure (5).

30. Escalier selon la revendication 19, caractérisé en ce qu'il comporte un berceau (125) articulé au chariot (4) parallèlement à l'articulation de la structure (5) sur celui-ci venant par pivotement vers le haut soutenir l'extrémité libre du tronçon inférieur (63) et verrouiller les deux tronçons (62) et (63) l'un à l'autre.

31. Escalier selon la revendication 30, caractérisé en ce que le mouvement du berceau (125) est obtenu lors de la rentrée du chariot (4) dans le compartiment (1) pour le déverrouillage et lors de la sortie de ce dernier lors du déverrouillage.

32. Escalier selon les revendications 19 et 30, caractérisé en ce qu'il est doté d'un dispositif de vérification du repliement des tronçons (62) et (63) l'un contre l'autre avant l'entrée du dit escalier dans le compartiment.

33. Escalier selon la revendication 32, caractérisé en ce que le dispositif de vérification du repliement des tronçons (62) et (63) est constitué par un contacteur (133) monté sur le tronçon supérieur (62) et apte à détecter la présence du tronçon inférieur (63) contre le tronçon supérieur (62) et par un autre contacteur (134) détectant l'actionnement du contacteur (133) après pivotement du berceau (125) et commandant l'arrêt de l'entrée de l'escalier dans le compartiment (1) dans le cas où le contacteur (133) ne serait pas actionné.

34. Escalier selon la revendication 1, caractérisé en ce que dans le compartiment (1) est monté au moins un palonnier (135) coopérant avec des organes de blocage montés sur l'extrémité avant de la structure (5) lorsque celle-ci est pliée afin de soulager le chariot (4) du porte à faux de la structure (5) et afin de bloquer celle-ci latéralement.

**Claims**

1. Foldable staircase for vehicles comprising a carriage (4) slidably mounted on rails (4A) in a compartment (1), a foldable staircase structure (5) mounted in an overhanging manner on the carriage (4), a motor mechanism (6) for actuating the said carriage in the compartment and motor means (7) for folding and unfolding along a vertical plane the structure (5) when this latter is outside the compartment, characterized in that the motor mechanism (6) is constituted by a rack and pinion assembly (14) and by an apparatus (15) for adjusting the play of the rack and pinion assembly and for guiding the carriage (4), constituted by a set of three friction rollers (20) fixed to said carriage and by a U-shaped slide (21) fixed parallel to the rack (16) and on the upper portion of the compartment (1) which slide is adapted to receive the set of friction rollers.

2. Staircase according to claim 1, characterized in that the central friction roller (20A) of the set of friction rollers (20) is mounted on an adjustable eccentric (23) and is held in contact with one inner face of the slide (21) and in that the axis of said central friction roller is aligned with the axis of the pinion (17) and the tangent point of the latter with the rack (16) so as to adjust the play in the rack and pinion assembly (14).

3. Staircase according to claim 1, characterized in that the friction rollers (20B) bear on the opposite face of the slide, parallel to the one in contact with the central friction roller (20A) and in that at least one of the friction rollers (20B) is mounted on an adjustable eccentric (24) so as to adjust the operating play of the friction rollers in the slide (21).

4. Staircase according to claims 1 and 2, characterized in that it is provided with means permitting the variation of the angular position of the longitudinal axis of the said staircase with respect to the longitudinal axis of the compartment (1) and about a vertical axis of rotation and means for guiding the carriage (4) with respect to the lateral rails (5) mounted to the rear of the said carriage.

5. Staircase according to claims 1 and 4, characterized in that the means permitting the angular variation of the longitudinal axis of the staircase are constituted by the articulated assembly of the carriage (4) with respect to a vertical axis of the apparatus for adjusting the play of the rack and pinion assembly and for lateral guiding of the carriage.

6. Staircase according to claims 1 and 4, characterized in that the means for guiding with respect to the lateral rails (4A) mounted to the rear of the carriage (4) and on each side of this latter are each constituted by two friction rollers (27) designed to roll against the vertical face of a rail (4A) and by a body (28) supporting the said friction rollers and being articulated along a vertical axis on the carriage (4).

7. Staircase according to claims 1 and 4, characterized in that it comprises means permitting a relative lateral tilting between the longitudinal axis of the staircase and the longitudinal axis of the vehicle and means for restoring the said longitudinal axis of the staircase parallel with the axis of the compartment (1) at the time of the re-entry of the said staircase into the said compartment.

8. Staircase according to claims 1, 4 and 7, characterized in that the means for lateral tilting and restoration in position of the staircase into the compartment (1) are constituted by a slot (29) provided in the vertical face of the rail (4A) opposite which is found, when the carriage (4) is at the end of its course, the forward friction roller (27) of the rear lateral guiding apparatus of the said carriage and by the articulated assembly of the support body (22) for the set of friction rollers (20) on the carriage (4).

9. Staircase according to claims 1 and 7, characterized in that the means permitting the relative tilting of the axis of the staircase with respect to the vehicle are each provided with a device determining a threshold force beyond which the tilting is permitted.

10. Staircase according to claim 9, characterized in that the device determining the threshold force is constituted by a cam (35) fixed to the body (28) carrying the friction rollers (27), by a wheel (36) articulated on the carriage (4) and rolling against the cam (35) and by an adjustable compression spring (37) fixed to the said carriage maintaining the wheel (36) applied against the cam (35).

11. Staircase according to claim 1, characterized in that it is provided with at least one slidable immobilization means for the carriage (4) in the compartment (1) in re-entry position.

12. Staircase according to claims 1 and 11, characterized in that the immobilization means is constituted by a pin (39) fixed to the rear extremity of the central slide (21) and by a locking device (40) fixed to the carriage and designed to come into cooperation with the pin (39).

13. Staircase according to claim 12, characterized in the that the locking device (40) is constituted by an articulated bolt (42) adapted to receive the pin (39), by an articulated lever (43) controlling the bolt (42), by a driving mechanism (44) for the lever (43) and by at least one contactor (45) detecting the locked state of the device (40).

14. Staircase according to claim 13, characterized in that on the articulation of the bold (42) is mounted a clasp (50) in which is placed the extremity of the bolt provided with a hook (47) in unlocked position under the effect of a spring (51), in that the hook (47) in unlocked position under the effect of a spring (51) receives in locked position a friction roller (48) carried by the articulated lever (43) and in that the clasp (50) in unlocked position comes to cover the hook (47) so that the friction roller (48) does not come to be housed therein.

15. Staircase according to claim 13 or 14, characterized in that the driving mechanism (44) for the lever (43) is constituted by an electromagnet which is energized at the time of the control for unlocking which causes the retreat of the friction roller (48) from the hook (47) of the bolt (42) and the closing of the hook by the clasp (50) and which is released when the carriage (4) has attained a certain position in the compartment (1).

16. Staircase according to claim 13, characterized in that the immobilization device comprises a contactor (45A) carried by the locking device (40) and actuated by the control lever (43) for the bolt (42) which on the one hand gives the command to the motor mechanism (6) to function to detect the unlocking and on the other hand causes the closing of the hatch of the compartment (1) on detecting the locking and comprises a contactor (45B) carried by the carriage (4) and actuated by a cam (56) fixed to the compartment (1) which gives the order to release the electromagnet when it is actuated.

17. Staircase according to claim 1, the foldable structure (5) of which is articulated between the flanks (8) of the carriage (4) and comprises motor means (7) for folding and unfolding the said structure, characterized in that the motor means (7) are constituted by a motor (76) carried by the staircase structure (5), by at least one circular chuck (77) fixed to an output shaft (78) of the motor and by at least one connecting rod (79) articulated between the chuck (77) and a lateral flank (8) of the carriage (4) and parallel to the beam (64).

18. Staircase according to claim 17, characterized in that the foot (79B) of the connecting rod (79) is provided with an oblong opening (92) extended in the axis of the said connecting rod, which oblong opening (92) receives a stud (91) fixed to a flank (8) of the carriage (4).

19. Staircase according to claim 17, the structure (5) of which is constituted by an upper section (62) and a lower section (63) articulated the one to the other, and the motor means (7) of which comprise at least one device for transmitting the movement to the lower section (63) with respect to its articulation to the upper sections (62), characterized in that these devices are each constituted by at least two cables (97) and (98) at least one of which permits the deployment of the structure (5) and the other or others its folding, by a pulley (99) mounted coaxially to the articulation of the sections (62) and (63) and on which are fixed the extremities of the cables (97) and (98), by the chuck (77) to the periphery of which is fixed the other extremity of the said cables and by sliding sleeves (100) for the cables disposed between the pulley (99) and the chuck (77).

20. Staircase according to claim 19, characterized in that the sliding sleeves (100) for the cables (97) and (98) are constituted by a plurality of friction rollers (103) the axes of rotation of which are disposed on an arc of a circle having a large radius of curvature.

21. Staircase according to claim 19, characterized in that between the sections (62) and (63) the said escalator is provided with at least one driving and locking system for the lower section (63) with respect to the upper section (62).

22. Staircase according to claim 21, characterized in that the driving and locking system for the lower section (63) with respect to the upper section (62) is constituted by a driver (111) fixed to the pulley (99), by a screw (112) articulated on the lower section cooperating with the driver (111), by an actuating mechanism and a mechanism for locking the screw (112) fixed to the upper section (62), by an elastic mechanism for maintaining in cooperation the screw with the driver (111) and by a slidable assembly for the pulley (99) on the articulation between the sections (62) and (63).

23. Staircase according to claim 22, characterized in that the upper surface of the driver (111), with which the screw cooperates, comprises a slot (111A) receiving a friction roller (113) mounted on the foot (114) of the bolt (112) and is rounded according to a radius of curvature the center of which is the axis of rotation of the pulley (99).

24. Staircase according to claim 22, characterized in that the mechanism for actuating and locking of the bolt (112) is constituted by a ramp (117) mounted on the upper section (62) having a profile of the arc of a circle having an axis parallel to the axis of articulation of the bolt (112) and on which comes to roll a friction roller (118) carried by the head of the bolt and by a rod (119) parallel to the said articulation axis of the bolt (112) mounted opposite the ramp (117) on the upper section (62) and against which comes to bear the catch (112B) of the bolt (112).

25. Staircase according to claims 19, 21 and 22, characterized in that the pulley (99) is mounted freely rotatably on journal bearings (120) delimited on the articulation between the sections (62) and (63).

26. Staircase according to claim 19 comprising a foldable staircase structure (5) constituted particularly by two guard rails (122) each comprising a main rail in two sections (201) and (202), an intermediate rail in two sections (203) and (204), two upper uprights (205) and (206) articulated to the upper section (62) of the staircase and a lower upright (207) articulated to the lower section (63) of the staircase, the staircase characterized in that the lower section of intermediate rail is shorter than the lower section of main rail, in that the lower extremities of these two sections are articulated the one to the other and to an upper extremity of the upright (207), in that the upper extremity of the section of main rail (202) and the lower extremity of the section of main rail (201) are articulated the one to the other and to the upper extremity of the upper upright situated closest to the articulation axis between sections, that is to say the upright (206) and in that the lower section of the intermediate rail is articulated to the upper section of intermediate rail at a point situated between the point of articulation to the upright (207) in such a fashion that the sections (202) and (204) constitute the sides of a deformable triangle having an imaginary base the apex of which, articulated to the upright (207), comes at the time of folding to be disposed beneath the upper section (62) of the staircase.

27. Staircase according to claim 26, characterized in that the articulation points of the uprights (205) and (206) to the upper section (62) of the staircase are spread apart from the lower extremity of the upper section and therefore from the articulation axis between sections.

28. Staircase according to claim 26, characterized in that the upper section (203) of the intermediate rail, the staircase section (62) define with the uprights (205) and (206) a deformable parallelogram which, at the time of folding of the structure (5) is deformed toward the articulation axis between sections.

29. Staircase according to claim 26 of the staircase comprising guard rails (122) provided with telescoping elements being connected to the frame of the access door characterized in that a contactor is mounted in each telescoping element and is actuated at the time of folding of the telescoping elements so as to give the order to commence the folding phase of the structure (5).

30. Staircase according to claim 19, characterized in that it comprises a cradle (125) articulated to the carriage (4) parallel to the articulation of the structure (5) which comes to bear, through pivoting upward, on the free extremity of the lower section (63) and to lock the two sections (62) and (63) the one to the other.

31. Staircase according to claim 30, characterized in that the movement of the cradle (125) is obtained at the time of the re-entry of the carriage (4) into the compartment (1) for the unlocking and at the time of the exit of this latter at the time of the unlocking.

32. Staircase according to claims 19 and 30, characterized in that it is provided with an apparatus for verifying the folding of the sections (62) and (63) the one against the other before the insertion of the said staircase into the compartment.

33. Staircase according to claim 32, characterized in that the device for verifying the folding of the sections (62) and (63) is constituted by a contactor (133) mounted on the upper section (62) and capable of detecting the presence of the lower section (63) against the upper section (62) and by another contactor (134) detecting the actuation of the contactor (133) after pivoting of the cradle (125) and controlling the stoppage of the insertion of the staircase into the compartment (1) in the case where the contactor (133) was not actuated.

34. Staircase according to claim 1, characterized in that the compartment (1) is mounted at least one compensator (135) cooperating with the blocking mechanisms mounted on the forward extremity of the structure (5) when this latter is folded so as to relieve the carriage (4) from the cantilever relationship with structure (5) and so as to block this latter laterally.

## Patentansprüche

1. Faltbare Treppe für Fahrzeuge, einen auf Schienen (4A) in einem Abteil (1) verschiebbaren Wagen (4), eine überstehend auf den Wagen (4) montierte faltbare Treppenstruktur (5), ein Antriebsorgan (6), um den besagten Wagen im Abteil zu betätigen, und Antriebsmittel (7), um die Struktur (5) in einer vertikalen Ebene zu falten und zu entfalten, wenn sich diese außerhalb des Abteils befindet, enthaltend, dadurch gekennzeichnet, daß das Antriebsorgan (6) aus einer Einheit von Zahnrad und Zahnstange (14) und einer Vorrichtung (15) für die Spieleinstellung der Einheit Zahnrad und Zahnstange und Führung des Wagens (4) besteht, zusammengesetzt aus einem Satz von drei Rollen (20), die mit besagtem Wagen fest verbunden sind, und aus einer U-förmigen Führungsbahn (21), die parallel zur Zahnschiene (16) und auf dem oberen Teil des Abteils (1) befestigt und für die Aufnahme des Rollensatzes (20) bestimmt ist.

2. Treppe gemäß Anspruch 1, dadurch gekennzeichnet, daß die zentrale Rolle (20A) des Rollensatzes (20) auf einen verstellbaren Exzenter (23) montiert ist und mit einer Innenseite der Führungsbahn (21) in Kontakt gehalten wird, und daß die Achse der besagten Mittelrolle mit der Achse des Zahnrades (17) und dem Berührungspunkt dieses letzteren mit der Zahnschiene (16) ausgerichtet ist, um das Spiel in der Einheit Zahnrad-Zahnschiene (14) einzustellen.

3. Treppe gemäß Anspruch 1, dadurch gekennzeichnet, daß die Rollen (20B) an die entgegengesetzte Seite der Führungsbahn andrücken, die parallel zu der ist, an die die Mittelrolle (20A) andrückt, und daß mindestens eine der Rollen (20B) auf einen verstellbaren Exzenter (24) montiert ist, um das Funktionsspiel der Rollen in der Führungsbahn (21) zu regeln.

4. Treppe gemäß Anspruch 1 und 2, dadurch gekennzeichnet, daß sie mit Mitteln, die die Veränderung der Winkelposition der Längsachse der besagten Treppe, bezogen auf die Längsachse des Abteils (1), und um eine vertikale Drehachse herum gestatten, und mit Führungsmitteln des Wagens (4) in Bezug auf die an der Rückseite des besagten Wagens montierten Seitenschienen (5) versehen ist.

5. Treppe gemäß Anspruch 1 und 4, dadurch gekennzeichnet, daß die Mittel für die Winkelverschiebung der Längsachse der Treppe aus der Gelenkmontage des Wagens (4) bestehen, bezogen auf eine vertikale Achse der Einstellvorrichtung des Spiels der Einheit Zahnrad-Zahnschiene (14) und der seitlichen Führung des Wagens (4).

6. Treppe gemäß Anspruch 1 und 4, dadurch gekennzeichnet, daß die Führungsmittel in Bezug auf die Seitenschienen (4A), die an der Rückseite des Wagens (4) und zu jeder seiner Seiten montiert sind, aus jeweils zwei Rollen (27) bestehen, die dafür bestimmt sind, gegen die vertikale Seite einer Schiene (4A) zu rollen, und aus einem Körper (28), der die besagten Rollen trägt und gelenkig um eine vertikale Achse auf dem Wagen (4) angeordnet ist.

7. Treppe gemäß Anspruch 1 und 4, dadurch gekennzeichnet, daß sie Mittel enthält, die ein seitliches Kippen in Bezug auf die Längsachse der Treppe und die Längsachse des Fahrzeugs zulassen, und Mittel, um die besagte Längsachse der Treppe beim Einfahren der besagten Treppe in besagtes Abteil parallel zur Achse des Abteils (1) zu bringen.

8. Treppe gemäß Anspruch 1, 4, 7, dadurch gekennzeichnet, daß die seitlichen Mittel zum Kippen und Zurücksetzen der Treppe in das Abteil (1) aus einer Kerbe (29) bestehen, die in der vertikalen Seite der Schiene (4a) angeordnet ist und der gegenüber sich, wenn der Wagen (4) an den Anschlag am Ende seines Wegs angelangt ist, die vordere Rolle (27) der seitlichen Führungsvorrichtung des besagten Wagens befindet, und aus der Gelenkmontage des Körpers (22), der den Rollensatz (20) auf dem Wagen (4) trägt.

9. Treppe gemäß Anspruch 1 und 7, dadurch gekennzeichnet, daß die Mittel für das Kippen der Treppenachse zum Fahrzeug mit je einer Vorrichtung ausgestattet sind, die eine Belastungsschwelle festlegen, über die hinaus das Kippen zulässig ist.

10. Treppe gemäß Anspruch 9, dadurch gekennzeichnet, daß die Vorrichtung, die die Belastungsschwelle festlegt, aus einer Nocke (35) besteht, die am Körper (28) befestigt ist, der die Rollen (27) trägt, und aus einem auf dem Wagen (4) gelenkig angeordneten Rad (36), das gegen die Nocke (35) rollt, und aus einer verstellbaren Druckfeder (37), die am besagten Wagen befestigt ist und das Rad (36) gegen die Nocke (35) gedrückt hält.

11. Treppe gemäß Anspruch 1, dadurch gekennzeichnet, daß sie mit mindestens einem Blockierungsmittel gegen das Gleiten des Wagens (4) im Abteil (1) in eingefahrener Position versehen ist.

12. Treppe gemäß Anspruch 1 und 11, dadurch gekennzeichnet, daß das Blockierungsmittel aus einem Vorsprung (39) besteht, der am hinteren Ende der zentralen Führungsbahn (21) befestigt ist, und aus einer Verriegelungsvorrichtung (40), die am Wagen befestigt ist und die dafür bestimmt ist, mit dem Vorsprung (39) zusammenzuwirken.

13. Treppe gemäß Anspruch 12, dadurch gekennzeichnet, daß die Verriegelungsvorrichtung (40) aus einem gelenkigen Riegel (42) besteht, der für die Aufnahme des Vorsprungs (39) bestimmt ist, aus einem gegliederten Hebel (43), der den Riegel (42) steuert, aus einem Antriebsorgan (44) des Hebels (43) und aus mindestens einem Schaltschütz (45), das den Verriegelungszustand der Vorrichtung (40) detektiert.

14. Treppe gemäß Anspruch 13, dadurch gekennzeichnet, daß eine Abdeckung (50) auf dem Gelenk des Riegels (42) montiert ist, in die das Ende des Riegels eingreift, der mit einer Aussparung (47) in entriegelter Position unter Wirkung einer Feder (51) versehen ist, daß die Aussparung (47) in entriegelter Position unter Einwirkung einer Feder (51) in verriegelter Position eine Rolle (48) aufnimmt, die vom gegliederten Hebel (43) getragen wird, und daß die Abdeckung (50) in entriegelter Position die Aussparung (47) verschließt, damit die Rolle (48) nicht in sie eingreifen kann.

15. Treppe gemäß Anspruch 13 oder 14, dadurch gekennzeichnet, daß das Antriebsorgan (44) des Hebels (43) aus einem Elektromagneten besteht, der bei der Steuerung der Entriegelung erregt wird, was den Rückzug der Rolle (48) aus der Aussparung des Riegels (42) und den Verschluß der Aussparung durch die Abdeckung (50) bewirkt, und der freigegeben wird, wenn der Wagen (4) eine gewisse Position im Abteil (1) erreicht hat.

16. Treppe gemäß Anspruch 13, dadurch gekennzeichnet, daß die Blockierungsvorrichtung ein Schaltschütz (45A) enthält, das von der Verriegelungsvorrichtung (40) getragen und vom Hebel (43) für die Betätigung des Riegels (42) betätigt wird, der einerseits dem Antriebsorgan (6) den Funktionsbefehl erteilt, wenn er die Entriegelung detektiert, und andrerseits das Schließen der Klappe des Abteils (1) bewirkt, wenn er die Verriegelung detektiert, und ein Schaltschütz (45B) enthält, das vom Wagen (4) getragen und von einer am Abteil (1) befestigten Nocke (56) betätigt wird, die den Befehl gibt, den Elektromagneten freizugeben, wenn sie betätigt wird.

17. Treppe gemäß Anspruch 1, deren faltbare Struktur (5) zwischen den Seiten (8) des Wagens (4) gelenkig ausgebildet ist und Antriebsmittel (7) zum Falten und Ausfahren der besagten Struktur enthält, dadurch gekennzeichnet, daß die Antriebsmittel (7) aus einem Motor (76) bestehen, der von der Treppenstruktur (5) durch mindestens eine kreisförmige Scheibe (77) getragen wird, die mit einer Ausgangswelle (78) des Motors fest verbunden ist, und durch mindestens eine Pleuelstange (79), die zwischen der Scheibe (77) und einer Seite (8) des Wagens (4) parallel zur Deichsel (64) gelenkig ausgebildet ist.

18. Treppe gemäß Anspruch 17, dadurch gekennzeichnet, daß der Fuß (79B) der Pleuelstange (79) in der Achse der besagten Pleuelstange eine längliche Öffnung (92) besitzt, die einen mit einer Seite (8) des Wagens (4) fest verbundenen Auflagerpunkt aufnimmt.

19. Treppe gemäß Anspruch 17, deren Struktur (5) aus einem oberen Abschnitt (62) und einem unteren Abschnitt (63) besteht, die gelenkig miteinander verbunden sind, und deren Antriebsmittel (7) mindestens eine Vorrichtung für die Übertragung der Bewegung an den unteren Abschnitt (63), bezogen auf sein Gelenk zum oberen Abschnitt (62) enthält, dadurch gekennzeichnet, daß diese Vorrichtungen jeweils aus mindestens zwei Seilzügen (97) und (98) bestehen, von denen mindestens einer das Ausfahren der Struktur (5) und das oder die anderen ihr Einfahren gestatten, über eine Rolle (99), die koaxial zum Gelenk der Abschnitte (62) und (63) montiert ist, und an der die Enden der Seilzüge (97) und (98) befestigt sind, durch die Scheibe (77) an deren Rand das andere Ende der besagten Seilzüge befestigt wird, und durch zwischen der Seilrolle (99) und der Scheibe (77) angeordnete Führungsbahnen (100).

20. Treppe gemäß Anspruch 19, dadurch gekennzeichnet, daß die Führungsbahnen (100) der Seilzüge (97) und (98) aus mehreren Rollen (103) bestehen, deren Drehachsen auf einem Kreisbogen mit großem Krümmungsradius angeordnet sind.

21. Treppe gemäß Anspruch 19, dadurch gekennzeichnet, daß die besagte Treppe zwischen den Abschnitten (62) und (63) mit mindestens einem System für Antrieb und Verriegelung des unteren Abschnitts (63) in Bezug auf den oberen Abschnitt (62) versehen ist.

22. Treppe gemäß Anspruch 21, dadurch gekennzeichnet, daß das System für Antrieb und Verriegelung des unteren Abschnitts (63) in Bezug auf den oberen Abschnitt (62) aus einem Schieber (111) besteht, der mit der Seilrolle (99) fest verbunden ist, aus einem Riegel (112), der um den unteren Abschnitt gelenkig ausgebildet ist und mit dem Schieber (111) zusammenwirkt, aus einem Betätigungsorgan und einem Organ zum Blockieren des mit dem oberen Abschnitt (62) fest verbundenen Riegels (112), aus einem elastischen Halteorgan, das ein Zusammenwirken des Riegels mit dem Schieber (111) ermöglicht, und einer gleitenden Montage der Rolle (99) an dem Gelenk zwischen den Abschnitten (62) und (63).

23. Treppe gemäß Anspruch 22, dadurch gekennzeichnet, daß die Oberfläche des Schiebers (111), mit der der Riegel zusammenwirkt, eine Einkerbung (111A) besitzt, die eine auf dem Fuß (114) des Riegels (112) montierte Rolle (113) aufnimmt und nach einem Krümmungsradius gerundet ist, dessen Zentrum die Drehachse der Rolle (99) ist.

24. Treppe gemäß Anspruch 22, dadurch gekennzeichnet, daß das Antriebs- und Blockierorgan des Riegels (112) aus einer auf den oberen Abschnitt (62) montierten Rampe (117) besteht, die ein kreisbogenförmiges Profil aufweist, mit der Achse parallel zur Gelenkachse des Riegels (112) und an die eine Rolle (118) rollt, die vom Kopf des Riegels und von einer zur besagten Gelenkachse des Riegels (112) parallelen Stange (119) getragen wird, gegenüber der Rampe (117) am oberen Abschnitt (62) montiert, an der der Schnabel (112B) des Riegels (112) anliegt.

25. Treppe gemäß Anspruch 19, 21 und 22, dadurch gekennzeichnet, daß die Rolle (99) frei drehbar auf den Lagern (120) montiert ist, die am Gelenk zwischen den Abschnitten (62) und (63) fest montiert sind.

26. Treppe gemäß Anspruch 19, mit einer faltbaren Treppenstruktur (5), insbesondere aus zwei Geländern (121) bestehend, die jeweils einen Handlauf in zwei Abschnitten (201) und (202) enthalten, sowie eine Zwischenstange in zwei Abschnitten (203) und (204), zwei obere Ständer (205) und (206), gelenkig mit dem oberen Treppenabschnitt (62) verbunden, und einen unteren Ständer (207), gelenkig mit dem unteren Treppenabschnitt (63) verbunden, dadurch gekennzeichnet, daß der untere Abschnitt der Zwischenstange kürzer ist als der untere Handlaufabschnitt, daß die unteren Enden dieser beiden Abschnitte gelenkig miteinander und am oberen Ende des Ständers (207) verbunden sind, daß das obere Ende des Handlaufs (202) und das untere Ende des Handlaufs (201) miteinander und mit dem oberen Ende des oberen Ständers, der möglichst nah an der Gelenkachse zwischen den Abschnitten gelegen ist, d.h. dem Ständer (206), verbunden sind, und daß der untere Abschnitt der Zwischenstange mit dem oberen Abschnitt der Zwischenstange an einem Punkt zwischen dem Verbindungspunkt am Ständer (207) so verbunden ist, daß die Abschnitte (202) und (204) die Seiten eines verformbaren Dreiecks mit einer gedachten Basis bilden, dessen gelenkige Spitze am Ständer (204) sich beim Falten unter dem oberen Treppenabschnitt anlegt.

27. Treppe gemäß Anspruch 26, dadurch gekennzeichnet, daß die Gelenkpunkte der Ständer (205) und (206) am oberen Treppenabschnitt (62) vom unteren Ende des oberen Abschnitts und damit von der Gelenkachse zwischen den Abschnitten weggespreizt sind.

28. Treppe gemäß Anspruch 26, dadurch gekennzeichnet, daß der obere Abschnitt der Zwischenstange (203), der Treppenabschnitt (62) mit den Ständern (205) und (206) ein verformbares Parallelogramm bilden, das sich beim Falten der Struktur (5) zur Gelenkachse zwischen den Abschnitten hin verformt.

29. Treppe gemäß Anspruch 26, mit Geländern (121) mit ausfahrbaren Bestandteilen, die sich am Rahmen der Zugangstür anschließen, dadurch gekennzeichnet, daß in jeden ausfahrbaren Bestandteil ein Schaltschütz montiert ist und beim Einfahren der ausfahrbaren Bestandteile betätigt wird, um den Befehl für den Beginn der Einfahrphase der Struktur (5) zu erteilen.

30. Treppe gemäß Anspruch 19, dadurch gekennzeichnet, daß sie einen Schlitten (125) enthält, gelenkig mit dem Wagen (4) verbunden, parallel zum Gelenk der Struktur (5) darauf, der durch Schwenken nach oben das freie Ende des unteren Abschnitts (63) stützt und die beiden Abschnitte (62) und (63) miteinander verriegelt.

31. Treppe gemäß Anspruch 30, dadurch gekennzeichnet, daß die Bewegung des Schlittens (125) beim Einfahren des Wagens (4) in das Abteil (1) für die Entriegelung und beim Ausfahren des Wagens bei der Entriegelung erreicht wird.

32. Treppe gemäß Anspruch 19 und 30, dadurch gekennzeichnet, daß sie mit einer Vorrichtung zur Überprüfung des Einfahrens der Abschnitte (62) und (63) gegeneinander vor dem Einfahren der besagten Treppe in das Abteil versehen ist.

33. Treppe gemäß Anspruch 32, dadurch gekennzeichnet, daß die Vorrichtung der Überprüfung des Einfahrens der Abschnitte (62) und (63) aus einem Schaltschütz (133) besteht, das auf den oberen Abschnitt (62) montiert ist und geeignet ist, die Anwesenheit des unteren Abschnitts (62) zu detektieren, und mit einem anderen Schaltschütz (134) die Wirkung des Schaltschützes (133) nach Schwenken des Schlittens (125) detektiert und die Unterbrechung des Einfahrens der Treppe in das Abteil (1) befiehlt, wenn das Schaltschütz (133) nicht betätigt werden sollte.

34. Treppe gemäß Anspruch 1, dadurch gekennzeichnet, daß im Abteil (1) mindestens ein Gestänge (135) montiert ist, das mit den Blockierorganen am vorderen Ende der Struktur (5) zusammenwirkt, wenn diese eingefahren ist, um den Wagen (4) vom Überhängen der Struktur (5) zu entlasten und diese seitlich zu blockieren.

Fig.1

EP 0 197 873 B1

Fig. 2

EP 0 197 873 B1

Fig.3

Fig. 5

Fig. 4

Fig. 7

Fig. 6

Fig. 8

Fig. 9

Fig. 10

Fig. 11

Fig. 15

EP 0 197 873 B1

Fig 12

Fig. 13

Fig. 14

Fig. 16

EP 0 197 873 B1

Fig.17

Fig. 18

Fig. 19

Fig. 20

Fig. 21

Fig. 22

Fig. 23

Fig. 26

Fig. 24

Fig. 25

EP 0 197 873 B1

Fig. 27

Fig. 29

Fig. 28